(19) Europäisches Patentamt / European Patent Office / Office européen des brevets

(11) **EP 2 451 650 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**09.09.2020 Patentblatt 2020/37**

(45) Hinweis auf die Patenterteilung:
**27.08.2014 Patentblatt 2014/35**

(21) Anmeldenummer: **10728614.8**

(22) Anmeldetag: **05.07.2010**

(51) Int Cl.:
**B42D 15/00** *(2006.01)*  **G02B 5/18** *(2006.01)*
**G02B 27/22** *(2018.01)*  **G02B 3/00** *(2006.01)*

(86) Internationale Anmeldenummer:
**PCT/EP2010/004057**

(87) Internationale Veröffentlichungsnummer:
**WO 2011/003558 (13.01.2011 Gazette 2011/02)**

(54) **MEHRSCHICHTKÖRPER**

MULTI-LAYER BODY

CORPS MULTICOUCHE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.07.2009 DE 102009032697**

(43) Veröffentlichungstag der Anmeldung:
**16.05.2012 Patentblatt 2012/20**

(73) Patentinhaber: **OVD Kinegram AG**
**6300 Zug (CH)**

(72) Erfinder:
• **SCHILLING, Andreas**
**CH-6332 Hagendorn (ZG) (CH)**
• **TOMPKIN, Wayne, Robert**
**CH-5400 Baden (CH)**
• **HANSEN, Achim**
**CH-6300 Zug (ZG) (CH)**

(74) Vertreter: **Zinsinger, Norbert**
**Louis, Pöhlau, Lohrentz**
**Patentanwälte**
**Postfach 30 55**
**90014 Nürnberg (DE)**

(56) Entgegenhaltungen:
WO-A1-2009/000528   WO-A2-2008/008635
DE-A1-102006 029 536   DE-A1-102006 029 536
DE-A1-102007 039 996   DE-A1-102007 057 658
DE-A1-102007 061 827   US-A1- 2007 291 362
US-A1- 2009 122 412

EP 2 451 650 B2

**Beschreibung**

Die Erfindung betrifft einen Mehrschichtkörper, insbesondere ein mehrschichtiges Sicherheitselement zur Sicherung von Sicherheitsdokumenten, insbesondere Banknoten oder ID-Dokumente oder Verpackungen oder Waren.

Sicherheitsdokumente werden zur Absicherung häufig mit Sicherheitselementen versehen, die eine Überprüfung der Echtheit des Sicherheitsdokuments ermöglichen und einen Schutz gegenüber einer Nachbildung des Sicherheitsdokuments bieten. Hierbei ist es bekannt, als Sicherheitselemente mehrschichtige Folienelemente einzusetzen, welche auf das Trägersubstrat des Sicherheitsdokuments appliziert werden und optisch variable Effekte zeigen. So offenbart beispielsweise die EP 0 330 733 A1 oder die EP 0 064 067 A1 derartige Folienelemente, welche beugungsoptische Strukturen aufweisen, die für die Generierung des optisch variablen Effekts verantwortlich sind. Nachteilig ist hier jedoch, dass Sicherheitselemente, die auf derartigen Strukturen beruhen, in großer Zahl in Umlauf sind und somit die durch derartige Strukturen erzielbaren optisch variablen Effekte vielfach verwendet werden.

Das Dokument US 2009/0122412 A1 offenbart einen Mehrschichtkörper (in Fig 11a) gemäß dem Oberbegriff von Anspruch 1 oder 2.

Der Erfindung liegt nun die Aufgabenstellung zugrunde, einen verbesserten Mehrschichtkörper bereitzustellen, der neuartige optisch variable Effekte zeigt.

Diese Aufgabe wird von einem Mehrschichtkörper gemäss Anspruch 1 oder 2 gelöst.

Durch die Erfindung wird ein Mehrschichtkörper mit einem neuartigen optisch variablen Effekt bereitgestellt. Der erfindungsgemäße Mehrschichtkörper zeichnet sich dadurch aus, dass er einen sehr hohen Schutz gegenüber Nachahmung und Nachbildung aufweist. So kann das Sicherheitselement weder durch holographische Kopiertechniken noch durch mechanisches Abformen von an der Oberfläche des Mehrschichtkörpers vorhandenen Oberflächenstrukturen kopiert werden.

Es hat sich überraschenderweise gezeigt, dass durch Wahl der oben angegebenen Abmessungen und der Verwendung der oben angegebenen, speziellen Mikrostrukturen abhängig vom Betrachtungswinkel unterschiedliche Teilbereiche der jeweiligen Mikrobilder sichtbar werden und sich aufgrund der oben beschriebenen Gestaltung des Mikrostrukturrasters und der relativen Anordnung des Mikrostrukturrasters und des Mikrobildrasters der in benachbarten Zonen generierte optisch variable Eindruck für den menschlichen Betrachter miteinander verschmilzt und somit ein zweidimensionaler oder dreidimensionaler optisch variabler Bildeindruck oder ein optisch variabler Bildeindruck mit Tiefenwirkung von hoher Brillanz, Kontrast und Prägnanz sichtbar werden kann. Weiter hat sich überraschenderweise gezeigt, dass derartige optisch variable Bildeindrücke auch durch die oben beschriebene spezielle Ausgestaltung von transparenten ersten und zweiten Zonen erzielt werden kann.

Bezüglich der Ausgestaltung und Orientierung der Mikrostrukturen und Mikrobilder hat sich insbesondere Folgendes als vorteilhaft erwiesen:

Bei Betrachtung des Sicherheitselements mit im Wesentlichen horizontal ausgerichteten bzw. horizontal verlaufenden bzw. orientierten Mikrostrukturen und/oder Mikrobildern tritt keine Tiefenwirkung auf, da beide Augen im Wesentlichen die gleichen Bilder wahrnehmen, bei im Wesentlichen vertikal ausgerichteten bzw. vertikal verlaufenden bzw. orientierten Mikrostrukturen und Mikrobildern tritt ein Tiefeneffekt auf, da die beiden Augen jeweils leicht unterschiedliche Bildeindrücke wahrnehmen, welche das menschliche Gehirn dann zu einem Bild mit Tiefenwirkung zusammensetzt. Bei diagonalen Ausrichtungen bzw. Verläufen bzw. Orientierungen der Mikrostrukturen und Mikrobildern, d.h. bei Zwischenstufen zwischen horizontal und vertikal, tritt eine teilweise Tiefenwirkung auf.

Weitere vorteilhafte Ausgestaltungen der Erfindung sind in den Unteransprüchen bezeichnet.

Gemäß eines bevorzugten Ausführungsbeispiels der Erfindung beträgt im ersten Bereich der Flächenanteil der ersten Zonen an der Gesamtfläche der ersten und zweiten Zonen zwischen 20 und 10%. Hierdurch wird der Vorteil erzielt, dass der optisch variable Effekt des Mehrschichtkörpers besonders prägnant und lichtstark zur Geltung kommt, weil der Flächenfüllfaktor der Gesamtfläche der ersten und zweiten Zonen vergleichsweise gering ist und dadurch die Schicht mit den Mikrobildern eine möglichst hohe Transmission aufweist.

Weiter ist es vorteilhaft, dass im ersten Bereich die von den ersten Zonen belegte Fläche mindestens um den Faktor 10 bis 20 kleiner als die von der dritten Zone belegte Fläche ist. Weiter ist es vorteilhaft, wenn die von den ersten Zonen belegte Fläche um nicht mehr als den Faktor 50 kleiner als die von den dritten Zonen belegte Fläche ist. Weiter ist es vorteilhaft, wenn im ersten Bereich die von jeder der ersten Zonen belegte Fläche jeweils um die vorgenannten Faktoren kleiner als die von der jeweilig zugeordneten dritten Zone belegte Fläche ist. Durch diese Maßnahmen wird ebenfalls erreicht, dass der von dem Mehrschichtkörper generierte optisch variable Effekt besonders lichtstark, mit hohem Kontrast und prägnant in Erscheinung tritt.

Vorzugsweise beträgt die Schichtdicke der zweiten Schicht zwischen 5 $\mu$m und 150 $\mu$m und/oder ist die Reflexionsschicht von der ersten Schicht zwischen 5 $\mu$m und 150 $\mu$m im ersten Bereich beabstandet. Der mittlere Abstand zwischen der ersten Schicht und der Reflexionsschicht beträgt hierbei im ersten Bereich vorzugsweise zwischen 15 $\mu$m und 75 $\mu$m. Untersuchungen haben gezeigt, dass bei einer derartigen Beabstandung der den optisch variablen Effekt generierenden Schichten eine besonders prägnante Blickwinkelabhängigkeit des optisch variablen Effekts erreicht wird.

Gemäß einem bevorzugten Ausführungsbeispiel der Erfindung werden die Mikrostrukturen jeweils so ausgebildet und/oder die Schichtdicke der zweiten Schicht so gewählt, dass die Mikrostrukturen senkrecht in Bezug auf die von der ersten Schicht aufgespannten Ebene aus Richtung der ersten Schicht im Bereich der jeweiligen dritten Zone einfallendes Licht auf einen Bereich der ersten Schicht rückreflektiert und/oder rückbeugt, dessen Fläche um einen Faktor im Bereich von 10 bis 10000 kleiner als die Fläche der jeweiligen dritten Zone ist. Entspricht die Breite oder Länge des Bereichs, auf den das Licht rückreflektiert und/oder rückgebeugt wird, im Wesentlichen der Breite bzw. Länge der jeweiligen dritten Zone, so wird der vorgenannte Faktor vorzugsweise aus dem Bereich 10 bis 200, weiter bevorzugt aus dem Bereich 15 bis 30 ausgewählt. Ist der Bereich, auf den das Licht rückreflektiert und/oder rückgebeugt wird in zwei unterschiedlichen Richtungen, insbesondere in zwei senkrecht aufeinander stehenden Richtungen in seinen Abmessungen gegenüber den Abmessungen in den entsprechenden Richtungen der jeweiligen dritten Zonen verringert, so wird der vorgenannte Faktor vorzugsweise aus dem Bereich 50 bis 10000, weiter bevorzugt aus dem Bereich 150 bis 2500 ausgewählt. Vorzugsweise wird dieser Faktor weiter so gewählt, dass die Fläche, auf die das einfallende Licht rückreflektiert und/oder rückgebeugt wird, um den Faktor 50 kleiner als die Fläche der jeweils zugeordneten ersten Zone ist. Durch eine derartige Auslegung der Mikrostrukturen, insbesondere in Bezug auf die Schichtdicke der zweiten Schicht wird ein besonders konturscharfer und lichtstarker optisch variabler Effekt durch den Mehrschichtkörper generiert.

Vorzugsweise sind die dritten Zonen in Form eines Vielecks, insbesondere in Form eines Rechtecks ausgeformt. Es ist jedoch auch möglich, dass die dritten Zonen eine runde oder ellipsenförmige Außenkontur besitzen. Besonders vorteilhaft ist eine dreieck-, viereck- oder achteckförmige Formgebung der dritten Zonen, da hierdurch ein nahtloser Übergang zwischen benachbarten dritten Zonen und damit eine besonders lichtstarke Ausbildung des optisch variablen Effekts erzielt werden kann.

Die Mikrostrukturen sind gemäß einem bevorzugten Ausführungsbeispiel der Erfindung als diffraktive Strukturen ausgebildet, insbesondere als diffraktive Strukturen mit einer Spatialfrequenz von mehr als 300 Linien/mm, weiter bevorzugt von mehr als 1000 Linien/mm ausgebildet.

Die Mikrostrukturen können als diffraktive oder refraktive Mikrostrukturen ausgebildet sein. Es kann sich hierbei insbesondere um Linear- oder Kreuzgitter im Linienzahlbereich von 100 Linien/mm bis 4000 Linien/mm handeln. Weiter kann es sich um isotrope oder anisotrope Mattstrukturen, Kinoformstrukturen, Blazegitter oder um eine Kombination der vorgenannten Strukturen handeln. Weiter kann es sich um diffraktive oder refraktive Freiformelemente handeln, die insbesondere hohlspiegelartig ausgebildet sind und einen optischen Vergrößerungs-, Verkleinerungs- oder Verzerrungseffekt erzeugen. Die Profilform kann halb-zylinderförmig, halbkugelförmig, trapezoidförmig oder dreieckförmig sein.

Die Reliefform und Spatialfrequenz der Mikrostruktur ist hierbei innerhalb des Bereichs der jeweiligen dritten Zone unterschiedlich gewählt, sodass das auf die dritte Zone einfallende Licht in verschiedenen Bereichen der dritten Zone unterschiedlich rückgebeugt wird und somit - wie oben bereits beschrieben - das von der Mikrostruktur auf der ersten Schicht rückgebeugte Licht eine Fläche einnimmt, die mindestens um den Faktor 10 kleiner als die Fläche der jeweiligen dritten Zone ist.

Vorzugsweise besitzt der Bereich, auf den das Licht durch die Mikrostruktur rückgebeugt wird, die Formgebung der jeweiligen dritten Zone und der Flächenschwerpunkt dieses Bereichs deckt sich mit dem Flächenschwerpunkt der jeweiligen dritten Zone. Es ist jedoch auch möglich, dass sich die Formgebung dieses Bereichs von der Formgebung der jeweiligen dritten Zone unterscheidet und auch die Flächenschwerpunkte des Bereichs und der jeweiligen dritten Zone sich nicht überdecken.

Die Mikrostrukturen können beispielsweise als Kinoform ausgebildet werden, welches über die oben beschriebene Beugungscharakteristik verfügt. Gemäß eines weiteren bevorzugten Ausführungsbeispiels der Erfindung wird die Spatialfrequenz der Mikrostruktur und/oder die Flankenneigung einer Flanke der Mikrostruktur im Bereich der dritten Zone variiert, um so durch die ortsabhängig unterschiedliche Beugung des einfallenden Lichts den oben beschriebenen Effekt zu erzielen. So wird beispielsweise die Spatialfrequenz der Mikrostruktur so gewählt, dass diese im Bereich des Flächenschwerpunkts der jeweiligen dritten Zone eine Frequenz von 0 Linien/mm bis 10 Linien/mm besitzt und sich die Spatialfrequenz der Mikrostruktur ausgehend von dem Flächenschwerpunkt in zumindest eine Raumrichtung erhöht, beispielsweise linear oder quadratisch erhöht. Weiter ist es auch möglich, dass die Mikrostruktur im Bereich des Flächenschwerpunkts in einer Richtung unmoduliert ist, d.h. keine Spatialfrequenz besitzt, oder moduliert ist und eine Spatialfrequenz zwischen 0,05 Linien/mm bis 10 Linien/mm besitzt.

Weiter kann beispielsweise die Flankenneigung der zum Flächenschwerpunkt der jeweiligen dritten Zone orientierten Flanke der Strukturelemente der Mikrostruktur ausgehend von dem Flächenschwerpunkt in zumindest einer Raumrichtung erhöht werden, d.h. dass diese Flanke in den Randbereichen der dritten Zone besonders steil und in dem zentralen Bereich der dritten Zone besonders flach ist. Diese Maßnahmen können auch miteinander kombiniert werden und es ist auch möglich, dass das Minimum der Flankenneigung/Spatialfrequenz nicht im Bereich des Flächenschwerpunkts, sondern auch in einem Randbereich der dritten Zone liegt.

Als Mikrostruktur kann beispielsweise eine durch folgende 1 D-Phasenfunktion definierte Mikro-

struktur verwendet werden:

$$Ph(x) = -2 * \pi / wl * \left( fl^2 - \sqrt{fl^2 - x^2} \right)$$

Ph: Phasenfunktion
wl: Designwellenlänge
fl: Fokuslänge
x: Orts-Koordinate

Die Linienzahlverteilung ergibt sich aus der Phasenfunktion durch Ableitung nach der Ortskoordinate.

Weiter ist es auch möglich, dass es sich bei den Mikrostrukturen um ein Blaze-Gitter mit im Wesentlichen dreieckförmigen Strukturelementen handelt. Hierbei ist vorteilhafter Weise vorgesehen, dass in einem ersten Bereich der dritten Zone und in einem zweiten Bereich der dritten Zone die Strukturelemente des Blaze-Gitters um 180° zueinander verdreht angeordnet sind, d.h. die geneigten Flächen der Strukturelemente einander zugewandt sind. Vorzugsweise ist die erste Zone hierbei in zwei etwa gleich große Teilbereiche durch eine Trennlinie geteilt, welche durch den Flächenschwerpunkt der jeweiligen dritten Zonen läuft, wobei in dem einen Teilbereich und in dem anderen Teilbereich die Strukturelemente um 180° gegeneinander verdreht angeordnet sind. Weiter ist es auch möglich, dass der Azimuthwinkel des Blaze-Gitters kontinuierlich variiert. So ist es beispielsweise möglich, dass ein Blaze-Gitter verwendet wird, welches ausgehend von dem Flächenschwerpunkt der jeweiligen dritten Zone in sämtliche Raumrichtungen eine konstante Spatialfrequenz aufweist, sodass die Strukturelemente jeweils eine kreisringförmige Form in der von dem Mehrschichtkörper aufgespannten Fläche aufweisen.

Weiter ist es auch möglich, dass die Mikrostruktur ein im Wesentlichen durch Reflektion wirkende Struktur ist. Um die gewünschten, ortsabhängig unterschiedlichen Reflektionseigenschaften der Mikrostruktur im jeweiligen dritten Bereich zu erzielen, ist die Mikrostruktur hierbei vorzugsweise so ausgeformt, dass sich die lokale Strukturtiefe der Mikrostruktur, d.h. die lokale Schichtdicke der Replizierlackschicht nach Abformung der Mikrostruktur vorzugsweise ausgehend von dem Flächenschwerpunkt der jeweiligen dritten Zone in zumindest eine Raumrichtung verringert. Beispielsweise wird hierbei die Strukturtiefe der Mikrostruktur wie folgt gewählt:

$$H(x) = R - \sqrt{R^2 - X^2}$$

H: Strukturtiefe
R: Krümmungsradius
X: Orts-Koordinate

Die Funktion H (x) beschreibt hierbei die Strukturtiefe in jeweils einer der dritten Zonen, d.h. eine Periode der in der zweiten Schicht abgeformten Mikrostruktur.

Gemäß einer weiteren bevorzugten Ausführungsform der Erfindung kann die Mikrostruktur aus der Überlagerung einer Grobstruktur und einer Feinstruktur bestehen. Die Grobstruktur wird vorzugsweise aus den oben beschriebenen, im Wesentlichen refraktiv wirkenden Strukturen ausgewählt und kann somit beispielsweise in Form eines Hohlspiegels, halbzylinderförmig, trapezoidförmig oder dreieckförmig ausgeformt sein. Die Feinstruktur wird vorzugsweise von einer diffraktiven Struktur, vorzugsweise mit einer Spatialfrequenz zwischen 1000 Linien/mm bis 3600 Linien/mm gebildet. Bevorzugt weist die Mikrostruktur hierbei zwei oder mehr Teilbereiche auf, in denen die Grobstruktur von unterschiedlichen Feinstrukturen überlagert ist. So sind beispielsweise die benachbarten Flanken der oben beschriebenen Grobstruktur mit unterschiedlichen diffraktiven Strukturen belegt, welche eine unterschiedliche optisch variable Information generieren, beispielsweise diffraktive Strukturen zur Generierung unterschiedlicher Hologramme darstellen.

Gemäß eines bevorzugten Ausführungsbeispiels der Erfindung ist jede der dritten Zonen im ersten Bereich von einer oder mehreren vierten Zonen umgeben, in denen die Reflektionsschicht nicht vorgesehen ist. Hierdurch wird es möglich, den Mehrschichtkörper mit einem zusätzlichen, in Transmission wirkenden Sicherheitsmerkmal zu versehen. Vorzugsweise ist hierzu der Mehrschichtkörper im Bereich der vierten Zone transparent ausgebildet. Bei entsprechender Wahl der vierten Zonen ist es weiter auch möglich, dass der optisch variable Effekt des Mehrschichtkörpers nicht nur in Auflichtbetrachtung, sondern auch in Durchlichtbetrachtung sichtbar wird. Hierbei ist es weiter vorteilhaft, im Bereich der vierten Zone weitere Mikrostrukturen vorzusehen, welche das im Bereich der vierten Zone von der Unterseite des Mehrschichtkörpers einfallende Licht streuen und/oder in Richtung der dritten Zonen ablenken.

Weiter ist es auch möglich, dass die Reflektionsschicht in den dritten Zonen und/oder in den vierten Zonen als transparente Reflektionsschicht ausgeführt ist. Die Reflektionsschicht kann hierzu beispielsweise aus einer transparenten metallischen Schicht oder mikrostrukturierten metallischen Schicht oder auch aus einer dielektrischen Schicht mit einem hohen Brechungsindex bestehen, beispielsweise als HRI-Schicht ausgestaltet sein (HRI = High Refraction Index). Bei geeigneter Parameterwahl dieser transparenten oder transluzenten Reflektionsschicht kann das im Wesentlichen gleiche optische Merkmal sowohl in Transmission als auch in Reflektion betrachtet werden.

Gemäß eines bevorzugten Ausführungsbeispiels der Erfindung weist die erste Schicht - wie bereits oben beschrieben - ein oder mehrere transparente erste Zonen auf, die jeweils durch ein oder mehrere transparente zweite Zonen voneinander getrennt sind. Die ersten und zweiten Zonen sind demnach transparent ausgebildet. Transparent in diesem Zusammenhang bedeutet, dass die erste Schicht eine Transmissivität von 50 % oder mehr im Bereich des für das menschliche Auge wahrnehmbaren Lichts besitzt, vorzugsweise eine Transparenz von mehr als 80 % in diesem Wellenlängenbereich besitzt. Unter opak wird eine Transmissivität von weniger als 50 %, vorzugsweise von weniger als 90% verstanden, bezogen auf den oben spezifizierten Wellenlängenbereich. Wie bereits oben ausgeführt, besitzen bei diesem Ausführungsbeispiel der Erfindung die transparenten ersten und zweiten Zonen ein unterschiedliches Transmissionsverhalten für das einfallende Licht. Besonders vorteilhaft ist hierbei, wenn die ersten Zonen und die zweiten Zonen unterschiedlich eingefärbt sind, die erste Zone beispielsweise in einer Primärfarbe eingefärbt ist und somit bei Durchlichtbetrachtung die Farbe dieser Primärfarbe zeigt und die zweiten Zonen glasklar durchsichtig oder mit einer anderen vorzugsweise kontrastierenden Farbe eingefärbt sind, und somit im Durchlicht eine entsprechende kontrastierende Farbe oder keine Farbe zeigen, d.h. das Wellenlängenspektrum des einfallenden Lichts durch die Filterwirkung der Farbe verändern oder nicht verändern.

Weiter ist es auch möglich, dass die ersten und zweiten Zonen eine unterschiedliche Transmissivität im Wellenlängenbereich des sichtbaren Lichtes besitzen. Vorzugsweise beträgt hierbei der Unterschied der Transmissivität zumindest 5 %, weiter bevorzugt zumindest 10 %.

Weiter ist es bevorzugt, wenn die ersten Zonen und die zweiten Zonen das einfallende Licht unterschiedlich ablenken, beispielsweise das einfallende Licht in den ersten Zonen abgelenkt wird und in den zweiten Zonen nicht abgelenkt wird.

Gemäß eines bevorzugten Ausführungsbeispiels der Erfindung sind hierzu in der ersten Schicht in den ein oder mehreren ersten Zonen jeweils eine erste diffraktive oder refraktive Struktur zur Ablenkung des einfallenden Lichts vorgesehen und in den ein oder mehreren zweiten Zonen keine derartige Struktur vorgesehen oder eine zweite diffraktive oder refraktive Struktur zur Ablenkung des einfallenden Lichts vorgesehen, die sich von der ersten Struktur unterscheidet. Bei diesen Strukturen handelt es sich vorzugsweise um Strukturen, welche in die Oberfläche der ersten Schicht oder einer Teilschicht der ersten Schicht abgeformt sind, vorzugsweise in die Grenzflächen zwischen der ersten Schicht und der Oberseite des Mehrschichtkörpers, d.h. zwischen der ersten Schicht und Luft abgeformt sind. Weiter ist es jedoch auch möglich, dass diese Strukturen in die Unterseite der ersten Schicht oder einer Teilschicht der ersten Schicht abgeformt sind oder zwischen zwei transparenten Schichten der ersten Schicht abgeformt sind, die einen Brechungsindexunterschied von mehr als 0,2 aufweisen. Weiter ist es auch möglich, dass diese Strukturen von Volumenhologrammen gebildet sind, welche in einer Volumenhologrammschicht eingeschrieben sind.

Die ein oder mehreren ersten Zonen sind vorzugsweise jeweils in Form eines Bildes, insbesondere einer bildlichen Darstellung, in Form von Zahlen und/oder Buchstaben oder eines Motivs ausgeformt. Weiter ist es auch möglich, dass die ein oder mehreren ersten Zonen jeweils Teilbilder eines sich aus den ersten Zonen zusammensetzenden Gesamtbildes ausbilden.

Vorzugsweise ist bei der Ausgestaltung der Strukturen als diffraktive Strukturen die Spatialfrequenz der Strukturen in den ersten Zonen so gewählt, dass die Spatialfrequenz der Struktur im Bereich des Flächenschwerpunkts der jeweiligen ersten Zonen ein Minimum besitzt und sich die Spatialfrequenz der Mikrostruktur ausgehend von dem Flächenschwerpunkt in zumindest eine Raumrichtung erhöht. Vorzugsweise erhöht sich die Spatialfrequenz ausgehend von dem Flächenschwerpunkt in alle Raumrichtungen in Abhängigkeit von dem Abstand R zum Flächenschwerpunkt. Vorzugsweise stellt die Spatialfrequenz hierbei eine Funktion f(R) dar, d. h. die Spatialfrequenz der Struktur wird durch den Abstand von dem Flächenschwerpunkt bestimmt. Die Spatialfrequenz wird hierbei vorzugsweise zwischen 100 Linien/mm und 3600 Linien/mm gewählt.

Weiter hat sich bewährt, dass sich die Flankenneigung der zum Flächenschwerpunkt der jeweiligen ersten Zonen orientierten Flanke der Strukturelemente der Struktur ausgehend von dem FLächenschwerpunkt in zumindest eine Raumrichtung erhöht.

Wird die erste Struktur als eine im Wesentlichen diffraktiv wirkende Struktur ausgelegt, so wird die Struktur vorzugsweise derart ausgebildet, dass die Strukturtiefe der Struktur im Bereich des Flächenschwerpunkts der jeweiligen ersten Zone ihr Minimum oder Maximum besitzt und sich ausgehend von dem Flächenschwerpunkt der jeweiligen ersten Zonen in zumindest eine Raumrichtung erhöht bzw. erniedrigt. Die Struktur kann hierbei derart ausgeformt sein, dass die ihre Strukturtiefe beschreibende Funktion stetig und differenzierbar ist. Es ist jedoch auch möglich, dass diese Struktur beispielsweise dreieckförmig oder trapezförmig ausgebildet ist.

Weitere Vorteile sind dadurch erzielbar, dass sich die Strukturtiefe ausgehend von dem Flächenschwerpunkt in alle Raumrichtungen in Abhängigkeit von dem Abstand zum Flächenschwerpunkt erhöht bzw. erniedrigt. Vorzugsweise wird die Strukturtiefe T somit von einer Funktion f(R) bestimmt, wobei R der Abstand vom Flächenschwerpunkt der jeweiligen ersten Zone ist.

Bei der oben beschriebenen Ausbildung der ein oder mehreren ersten Zonen als transparente Zonen mit unterschiedlichem Transmissionsverhalten ist gemäß einem Ausführungsbeispiel der Erfindung vorgesehen, dass die ein oder mehreren ersten Zonen eine kleinste Abmessung von mehr als 300 $\mu$m aufweisen, insbesondere eine Breite und/oder Höhe von mehr als 3 mm aufweisen. Damit besitzen die ein oder mehreren ersten Zonen eine Dimension, welche durch den menschlichen Betrachter auflösbar ist. Die Generierung einer bildlichen, optisch variablen Darstellung wird hier durch die unterschiedliche Transmission des einfallenden Lichts durch die ersten und zweiten Zonen, durch die oben beschriebene Ablenkung in den dritten Zonen und durch die entsprechende Beeinflussung des rückreflektierten Lichts beim Durchgang durch die ersten und zweiten Zonen der ersten Schicht bewirkt.

Weiter ist es gemäß einem bevorzugten Ausführungsbeispiel der Erfindung auch möglich, dass die ersten Zonen als Mikrobilder mit einer kleinsten Beabstandung von weniger als 100 $\mu$m ausgeformt sind und gemäß eines Mikrobildrasters mit einer Beabstandung benachbarter Bilder von weniger als 300 $\mu$m angeordnet sind, wobei hierdurch das Mikrobildraster ein erstes Koordinatensystem mit einer Koordinatenachse x1 und einer hierzu rechtwinkeligen Koordinatenachse y1 aufgespannt ist und wobei in einem ersten Bereich des Mehrschichtkörpers die Mikrobilder des Mikrobildrasters und die Mikrostrukturen des Mikrostrukturrasters sich überlagernd in fester Lage zueinander angeordnet sind und der durch die Beabstandung der Flächenschwerpunkte benachbarter dritter Zonen bestimmte Mikrostrukturabstand und der durch die Beabstandung der Flächenschwerpunkte benachbarter erster Zonen bestimmte Mikrobildabstand sich voneinander in zumindest einer Raumrichtung im ersten Bereich um nicht mehr als 10 % unterscheidet.

Gemäß eines weiteren bevorzugten Ausführungsbeispiels der Erfindung ist die erste Schicht so ausgebildet, dass sie eine Vielzahl von opaken und/oder reflektiven ersten Zonen aufweist, die jeweils durch ein oder mehrere transparente zweite Zonen voneinander getrennt sind.

Es hat sich hierbei als zweckmäßig erwiesen, dass die erste Schicht von einer Metallschicht gebildet wird, wobei das Metall der Metallschicht in den ersten Zonen vorgesehen und in den zweiten Zonen nicht vorgesehen ist.

Bei der ersten diffraktiven Oberflächenstruktur handelt es sich beispielsweise um ein Hologramm oder Kinegram®, welches beispielsweise blickwinkelabhängig unterschiedliche Motive oder Bewegungseffekte zeigt. Weiter ist es auch möglich, dass es sich bei der diffraktiven Oberflächenstruktur um eine Beugungsstruktur nullter Ordnung, um ein einfaches Beugungsgitter oder um eine Mattstruktur handelt. Durch eine derartige Ausgestaltung lassen sich interessante optisch variable Effekte generieren, welche aus der Überlagerung des durch die erfindungsgemäße Ausgestaltung des Mehrschichtkörpers bewirkten optisch variablen Effekts mit dem durch die erste diffraktive Oberflächenstruktur bewirkten optisch variablen Effekt erzielt werden. Ein zusätzlicher Schutz gegenüber Kopierung und Nachahmung wird hierbei dadurch erzielt, dass die erste diffraktive Oberflächenstruktur der zweiten Schicht zugewandt ist und somit dessen optische Wirkung nur indirekt über die Mikrostrukturen dem Betracht vermittelt wird, was die Reproduzierung der ersten diffraktiven Oberflächenstruktur sehr erschwert.

Vorteilhaft ist hierbei weiter, wenn die Bereiche der ersten Zonen in denen die erste diffraktive Oberflächenstruktur abgeformt ist, auf ihrer von der zweiten Schicht abgewandten Seite mit einer Abdeckschicht versehen sind, welche verhindert, dass die optisch variable Wirkung der ersten diffraktiven Oberflächenstruktur von der Oberseite des Mehrschichtkörpers direkt sichtbar ist.

Gemäß eines weiter bevorzugten Ausführungsbeispiels der Erfindung ist in den zweiten Zonen eine zweite diffraktive Oberflächenstruktur abgeformt, die sich von der ersten diffraktiven Oberflächenstruktur unterscheidet. Bei dieser in Transmission wirkenden Oberflächenstrukturen handelt es sich bevorzugt um eine Oberflächenstruktur, welche das einfallende Licht in einer speziellen Winkellage auf die dritten Zonen ablenkt oder welche einen optisch variablen Effekt generiert, welcher als Hintergrund für den durch den erfindungsgemäßen Mehrschichtkörper generierten optisch variablen Effekt wirkt.

Die erste Schicht kann beispielsweise aus einer Metallschicht, aus Schichten unterschiedlicher Metalle, aus einer Schicht bestehend aus einer Druckfarbe, aus einer eingefärbten Photoresistschicht (negativer/positiver Photoresist), aus einem Dünnschichtsystem oder einer Kombination solcher Schichten bestehen. Eine metallische Schicht besteht hierbei vorzugsweise aus Aluminium, Silber, Kupfer, Gold, Chrom oder einer Legierung mit solchen Metallen.

Gemäß eines bevorzugten Ausführungsbeispiels der Erfindung besteht die erste Schicht aus zwei oder mehreren übereinander angeordneten Teilschichten. Bei diesen Teilschichten handelt es sich insbesondere um Schichten, die aus der Gruppe: Metallschicht, HRI-Schicht (HRI = High Refraction Index), Replizierlackschicht und Farbschicht ausgewählt sind. So ist es beispielsweise möglich, dass die erste Schicht aus der Abfolge einer Farblackschicht, einer Replizierlackschicht mit abgeformter erster diffraktiver Oberflächenstruktur und einer Metallschicht besteht, die in den ersten Zonen vorgesehen und in den zweiten Zonen nicht vorgesehen ist.

Vorzugsweise ist in die von der zweiten Schicht abgekehrten Oberfläche der ersten Schicht oder einer Teilschicht der ersten Schicht in den ersten Zonen eine dritte diffraktive Oberflächenstruktur abgeformt. Die zweite Schicht ist weiter vorzugsweise so ausgestaltet, dass der optische Effekt der dritten diffraktiven Oberflächenstruktur nur auf das auf die Oberseite der ersten Schicht fallende Licht wirkt, nicht jedoch auf das auf die Unterseite der ersten Schicht fallende Licht wirkt. Dies kann beispielsweise dadurch erzielt werden, dass unterhalb der diffraktiven Oberflächenstruktur eine Abdeckschicht, insbesondere eine metallische Schicht vorgesehen ist, oder das unterschiedliche Oberflächenstrukturen in die obere und die untere Grenzfläche der ersten Schicht abgeformt sind, beispielsweise die dritte Oberflächenstruktur in die obere Grenzfläche und die erste Oberflächenstruktur in die untere Grenzfläche der ersten Schicht zu den benachbarten Schichten abgeformt sind.

Durch eine derartige Ausgestaltung des Mehrschichtkörpers lassen sich weitere interessante optisch variable Effekte erzielen, wobei beispielsweise der durch die dritte diffraktive Oberflächenstruktur generierte optisch variable Effekt als Hintergrund für den neuartigen, durch den erfindungsgemäßen Mehrschichtkörper generierten optisch variablen Effekt wirkt.

Im Weiteren haben Untersuchungen überraschenderweise gezeigt, dass durch eine spezielle Ausgestaltung der dritten Oberflächenstruktur die Kontraststärke des neuartigen optisch variablen Effekts weiter verbessert werden kann. Wird als dritte Oberflächenstruktur eine Oberflächenstruktur mit einem Tiefen-zu-Breiten-Verhältnis der Strukturelemente von mehr als 0,5 und einer Spatialfrequenz von mehr als 2000 Linien/mm gewählt, z.B. eine Kreuzgitterstruktur, so kann eine Verbesserung des Kontrasts erzielt werden.

Weiter hat es sich auch als zweckmäßig erwiesen, dass eine vierte Schicht zwischen der ersten und zweiten Schicht vorgesehen ist, die transluzent ist oder eingefärbt ist. Die Transluzenz oder Einfärbung kann dabei auch nur partiell vorgesehen sein, d.h. nur in einem Teil-Flächenbereich der Schicht.

Die Reflektionsschicht, mit der die Mikrostrukturen belegt sind, besteht vorzugsweise aus einer opaken Reflektionsschicht, beispielsweise einer Metallschicht. Es ist jedoch auch möglich, dass die Reflektionsschicht von einer transparenten Reflektionsschicht, beispielsweise von einer dielektrischen Schicht, beispielsweise einer HRI-Schicht (HRI = High Refraction Index), einer sehr dünnen und damit transparenten Metallschicht oder einer mikrostrukturierten Metallschicht gebildet wird. Weiter ist es auch möglich, dass in den vierten Zonen die Reflektionsschicht nicht vorgesehen ist oder dass die zweite Schicht Bereiche aufweist, in denen die Reflektionsschicht über unterschiedlich Reflektions- oder Transmissionseigenschaften verfügt. So ist es beispielsweise möglich, dass die zweite Schicht bereichsweise mit einer transparenten Reflektionsschicht und teilweise mit einer opaken Reflektionsschicht belegt ist. Hierbei ist die Flächenbelegung mit der transparenten Reflektionsschicht so zu wählen, dass mindestens 20 % der Fläche mit einer opaken Reflektionsschicht belegt ist.

Es ist jedoch auch möglich, dass die gesamte zweite Schicht mit einer transparenten Reflektionsschicht belegt ist, um so beispielsweise unterhalb des generierten optisch variablen Effekts noch optisch variable Effekte von unter der Reflektionsschicht angeordneten Schichten, beispielsweise eines auf dem Zielsubstrat aufgebrachten Aufdrucks sichtbar zu machen.

Als opak wird hier eine Schicht betrachtet, welche eine Transmissivität von weniger als 1 % besitzt. Als transparent wird eine Schicht betrachtet, welche eine Transmissivität von mindestens 50 % besitzt. Die Transmissivitätsangaben beziehen sich hierbei vorzugsweise auf den Wellenlängenbereich, welcher für den menschlichen Betrachter sichtbar ist.

Gemäß eines bevorzugten Ausführungsbeispiels der Erfindung sind die Koordinatenachsen y1 und die Koordinatenachse y2 sowie die Koordinatenachse x1 und die Koordinatenachse x2 in dem ersten Bereich jeweils parallel zueinander ausgerichtet. Parallel zueinander ausgerichtet bedeutet hierbei, dass die erste und die zweite Schicht im Rahmen der Fertigungstoleranz so zueinander ausgerichtet sind, dass die Koordinatenachsen y1 und y2 beziehungsweise x1 und x2 im Rahmen der Fertigungstoleranzen parallel zueinander verlaufen. Weiter ist im ersten Bereich der Mikrostrukturabstand und der Mikrobildabstand benachbarter Mikrostrukturen und Mikrobilder in Richtung zumindest einer Koordinatenachse so gewählt, dass sich der Mikrostrukturabstand und der Mikrobildabstand zwischen 0,5 und 10 % voneinander unterscheiden.

Weiter ist es auch möglich, dass die Koordinatenachse y1 und die Koordinatenachse y2 sowie die Koordinatenachse x1 und die Koordinatenachse x2 im ersten Bereich jeweils einen Winkel zwischen 0,01 ° und 5 ° einschließen. Hierbei wird der Mikrostrukturabstand und der Mikrobildabstand benachbarter Mikrostrukturen und Mikrobilder bevorzugt identisch gewählt. Weiter ist es auch möglich, den Mikrostrukturabstand und Mikrobildabstand unterschiedlich zu wählen, insbesondere in dem vorgenannten Bereich zu wählen.

Bei einer derartigen Ausgestaltung des Mehrschichtkörpers lassen sich beim Kippen des Mehrschichtkörpers interessante Bewegungseffekte erzielen.

Die erste und zweite Raumrichtung entspricht vorzugsweise der Richtung der Koordinatenachse x1 oder y1 bzw. x2 oder y2.

Das Mikrobildraster und/oder das Mikrostrukturraster kann im ersten Bereich als ein dimensionales Raster ausgebildet sein, d.h. das lediglich in eine Raumrichtung, in der ersten bzw. zweiten Raumrichtung, Mikrobilder bzw. Mikrostrukturen aufeinander folgen. Es ist jedoch auch möglich, dass das Mikrobildraster und/oder das Mikrostrukturraster im ersten Bereich ein zweidimensionales Raster ausbilden, d.h. das Mikrobilder bzw. Mikrostrukturen in zwei Raumrichtungen aufeinander abfolgen und so beispielsweise in Richtung der Koordinatenachse y1 bzw. y2 und in Richtung der Koordinatenachse x1 bzw. x2 Mikrobilder bzw. Mikrostrukturen aufeinander abfolgen.

Der Rasterabstand des Mikrobildrasters und/oder des Mikrostrukturrasters ist gemäß einer Ausführungsform der Erfindung im ersten Bereich konstant gewählt, d.h. das der Mikrobildabstand in Richtung der Koordinatenachse x1 einen ersten konstanten Wert r1, der Mikrobildabstand in Richtung der Koordinatenachse y1 (beim zweidimensionalen Raster) einen konstanten Wert r2 besitzt (welcher jedoch von dem Wert r1 unterschiedlich sein kann) und /oder dass der Mikrostrukturabstand in Richtung der x2-Achse einen Wert r3 und der Mikrostrukturabstand in Richtung der y2-Achse einen konstanten Wert r4 (der unterschiedlich vom Wert r3 sein kann) besitzt.

Komplexe Bewegungseffekte lassen sich dadurch erzielen, dass der Rasterabstand des Mikrobildrasters und/oder des Mikrostrukturrasters sich im ersten Bereich in zumindest eine Raumrichtung ändert, beispielsweise stetig ändert. So wurden beispielsweise besonders interessante Bewegungseffekte bei einer Ausgestaltung des Mehrschichtkörpers beobachtet, bei der die Rasterabstände der Mikrobilder und/oder Mikrostrukturen in dem ersten Bereich in Richtung der Koordinatenachse x1 bzw. x2 konstant sind und die Rasterabstände der Mikrobilder beziehungsweise Mikrostrukturen in Richtung der Koordinatenachse x1 bzw. x2 in Abhängigkeit von der durch die Koordinatenachse y1 bzw. y2 bestimmte Koordinate y und/oder der durch die Koordinatenachse x1 bzw. x2 bestimmte Koordinate x gemäß einer Funktion F (x, y) variieren.

Gemäß einer weiteren bevorzugten Ausführungsform der Erfindung ist die Längsachse der Mikrobilder gegenüber der Querachse der Mikrobilder durch eine Transformationsfunktion gestreckt, vorzugsweise um mehr als das zehnfache gestreckt. Vorzugsweise werden derart verzerrte Mikrobilder in Kombination mit dritten Zonen verwendet, die eine Breite von weniger als $300\mu m$ und eine Länge von mehr als $300\mu m$, insbesondere eine Länge zwischen 2mm und 100mm aufweisen. Derartige Mehrschichtkörper zeichnen sich dadurch aus, dass die sich bei Betrachtung zeigende optisch variable Information sich deutlich von der Formgestaltung der ersten Zonen unterscheidet und damit die Nachahmung des durch den Mehrschichtkörper generierten optisch variablen Effekts weiter erschwert ist.

Die Mikrobilder des Mikrobildrasters können im ersten Bereich von identischen Mikrobildern gebildet werden. Komplexe Bewegungs-, Vergrößerungs- und Verkleinerungseffekte bei Kippen des Mehrschichtkörpers können dadurch generiert werden, dass die Mikrobilder des Mikrobildrasters in dem ersten Bereich von Mikrobildern gebildet sind, welche durch eine geometrische Transformation eines Grundbildes umfassend Drehung und/oder Vergrößerung oder Verkleinerung des Grundbilds und optionaler anschließender Verzerrung gemäß einer Transformationsfunktion gebildet sind. Weiter ist es auch möglich, dass ein erstes Grundbild über eine vorgegebene Bewegungsbahn durch eine geometrische Transformation in ein zweites Grundbild übergeht und dass sich so beispielsweise die jeweils benachbarten Mikrobilder geringfügig unterscheiden, gemäß der gewählten geometrischen Transformation.

Die Mikrostrukturen des Mikrostrukturrasters in dem ersten Bereich werden vorzugsweise von identischen Mikrostrukturen gebildet. Zur Erzielung komplexer Bewegung-, Vergrößerungs- und Verkleinerungseffekte beim Kippen des Mehrschichtkörpers ist es jedoch auch möglich, dass sich zumindest zwei Mikrostrukturen des Mikrostrukturrasters im ersten Bereich voneinander unterscheiden. Besonders vorteilhaft ist es hierbei, wenn sich die Bereiche der ersten Schicht, auf die das aus Richtung der ersten Schicht im Bereich der jeweiligen dritten Zone einfallende Licht rückreflektiert und/oder rückgebeugt wird, in ihrer Fläche, Breite und/oder Länge gemäß einer Transformationsfunktion in Abhängigkeit von der Koordinate auf der x2- und/oder y2-Koordinatenachse ändern.

Als Transformationsfunktionen werden hierbei vorzugsweise eine abschnittsweise stetige und differenzierbare Funktion mit einer Beabstandung der Maxima von mehr als $300\mu m$ gewählt.

Gemäß eines bevorzugten Ausführungsbeispiels der Erfindung wird das erste und/oder zweite Koordinatensystem von einem Koordinatensystem mit kreis- oder schlangenlinienförmigen Koordinatenachsen gebildet. Hierdurch wird eine Nachbildung oder Nachahmung der von dem Mehrschichtkörper generierten optisch variablen Effekte weiter erschwert.

Es hat sich als zweckmäßig erwiesen, dass der erste Bereich eine kleinste Flächenabmessung von mehr als $300\mu m$ besitzt, insbesondere eine kleinste Flächenabmessung von mehr als 3mm besitzt.

Gemäß eines weiteren bevorzugten Ausführungsbeispiels der Erfindung weist der Mehrschichtkörper einen neben dem ersten Bereich angeordneten zweiten Bereich auf, der wie folgt ausgebildet ist. In dem zweiten Bereich sind die Mikrobilder des Mikrobildrasters und die Mikrostrukturen des Mikrostrukturrasters ebenfalls in fester Lage zueinander angeordnet und der durch die Beabstandung der Flächenschwerpunkte benachbarter dritter Zonen bestimmte Mikrostrukturabstand und der durch die Beabstandung der Flächenschwerpunkte benachbarten ersten Zone bestimmte Mikrobildabstand unterscheiden sich voneinander in zumindest einer dritten Raumrichtung im zweiten Bereich um nicht mehr als 10%. Weiter unterscheidet sich in dem zweiten Bereich das Mikrobildraster und/oder das Mikrostrukturraster in einem oder mehreren Parameter, ausgewählt aus der Gruppe Mikrobildabstand, Mikrostrukturabstand, Ausrichtung der x1-, x2-, y1-, y2-Koordinatenachse und Verzerrung der Mikrobilder, gegenüber dem Mikrobildraster und/oder dem Mikrostrukturraster in dem ersten Bereich. Hierdurch wird erreicht, dass in dem ersten und zweiten Bereich unterschiedlich optisch variable Effekte generiert werden, wodurch ein besonders markantes und einprägsames Sicherheitsmerkmal von dem Mehrschichtkörper bereitgestellt wird. Neben dem zweiten Bereich kann der Mehrschichtkörper auch noch weitere Bereiche aufweisen, die wie der erste und zweite Bereich ausgebildet sind, sich jedoch in einem der vorgenannten Parameter des Mikrobildrasters und/oder des Mikrostrukturrasters von dem Mikrobildraster und/oder dem Mikrostrukturraster des ersten und zweiten Bereichs unterscheiden.

Der erste, zweite und weitere Bereich können hierbei auch jeweils eine spezielle Formgebung besitzen, durch die dem Betrachter eine spezielle weitere Information vermittelt wird, beispielsweise eine Formgebung in Form eines Symbols oder einer Zahlenfolge besitzen. Bezüglich der Ausgestaltung des zweiten Bereichs und der weiteren Bereiche wird auf obige Ausführung bezüglich der Ausgestaltung des ersten Bereichs verwiesen.

Besonders interessante, gegenläufige Bewegungseffekte lassen sich dadurch erzielen, dass in dem ersten Bereich die Differenz aus dem Mikrobildabstand und dem Mikrostrukturabstand positiv und in dem zweiten Bereich negativ ist. Für derartige Bewegungseffekte ist es vorteilhaft, wenn benachbart zu dem Flächenbereich mit dem Bewegungseffekt statische Referenzelemente vorhanden sind. Diese statischen Elemente können dem Auge als relative optische Anhaltspunkte bzw. Fixpunkte dienen, um den Bewegungseffekt gut wahrnehmen zu können. Derartige statische Elemente können angrenzende Ränder, statische Drucke oder auch optische variable Elemente sein, die keinen Bewegungseffekt generieren, sondern z.B. einen Farbwechseleffekt.

Weitere interessante optische Effekte lassen sich dadurch erzielen, dass die Mikrobilder des Mikrobildrasters in dem ersten Bereich und in dem zweiten Bereich sich voneinander unterscheiden oder das Mikrobildraster und/oder das Mikrostrukturraster in Bezug auf eine der Koordinatenachsen zueinander insbesondere in Teilflächenbereichen einen Phasenversatz aufweisen. Weitere interessante optische Effekte lassen sich dadurch erzielen, dass die Mikrostrukturen des Mikrostrukturrasters im ersten Bereich sich von den Mikrostrukturen des Mikrostrukturrasters im zweiten Bereich unterscheiden, insbesondere sich die Bereiche der ersten Schicht, auf die das aus Richtung der ersten Schicht im Bereich der jeweiligen dritten Zone einfallende Licht rückreflektiert und/oder rückgebeugt wird, sich in ihrer Fläche, Breite und/oder Länge unterscheiden.

Weitere interessante optische Effekte lassen sich dadurch erzielen, dass verschiedene Teilbildinformationen in den Mikrobildern des Mikrobildrasters ineinander gerastert sind, d.h. ineinander verschachtelt bzw. so angeordnet sind, dass sich die jeweiligen Teilbildinformationen innerhalb des Mikrobildrasters insbesondere regelmäßig wiederholen, wobei die Rasterorientierung und die Rasterweite relativ zu der Rasterorientierung und der Rasterweite des Mikrostrukturrasters die Art des resultierenden visuellen Effekts bestimmt. Durch Variation dieser Parameter (Anzahl verschiedener Teilbildinformationen, Bildinhalt der verschiedenen Teilbildinformationen, relative Orientierung der Teilbildinformationen zum Mikrostrukturraster, Rasterweite der Teilbildinformationen relativ zur Rasterweite des Mikrostrukturrasters) lassen sich somit verschiedene visuelle Effekte, wie zum Beispiel überlappende, insbesondere gegenläufige Bewegungseffekte, Bildflips (Transformationseffekt von einem Bild auf ein anderes Bild), Bildmorphings (Transformationseffekt von einem Bild in ein anderes Bild mittels Zwischenbilder) erzeugen.

Vorzugsweise sind zwei oder mehr erste und zweite Bereiche abwechselnd nebeneinander angeordnet.

Gemäß eines bevorzugten Ausführungsbeispiels ist der Mehrschichtkörper ein Sicherheits- oder Wertdokument, insbesondere eine Banknote oder ein ID-Dokument oder ein Label für den Schutz von Waren, und weist so weiter auch ein Trägersubstrat auf. Das Trägersubstrat wird so beispielsweise von dem Papiersubstrat einer Banknote gebildet.

Als besonders vorteilhaft hat sich bei einer derartigen Ausbildung des Mehrschichtkörpers erwiesen, die erste und die zweite Schicht auf gegenüberliegenden Seiten des Trägersubstrats anzuordnen. So ist es beispielsweise gemäß eines bevorzugten Ausführungsbeispiels der Erfindung möglich, dass auf eine erste Seite eines transparenten Trägersubstrats, beispielsweise dem Trägersubstrat einer Polymer-Banknote oder eines ID-Dokuments, ein Körper umfassend die erste Schicht beispielsweise als Transferlage einer Transferfolie, insbesondere einer Heißprägefolie appliziert wird. Auf die gegenüberliegende zweite Seite des Trägersubstrats wird beispielsweise ebenfalls mittels einer Transferfolie ein Körper umfassend die zweite Schicht und die Reflektionsschicht appliziert. Weiter ist es auch möglich, dass auf ein Laminat umfassend eine Trägerfolie und die erste Schicht oder die zweite Schicht und die Reflektionsschicht ein Körper umfassend die zweite Schicht und die Reflektionsschicht bzw. die erste Schicht appliziert wird, insbesondere als Transferlage einer Transferfolie appliziert wird. Weiter ist es auch möglich, dass auf ein Laminat umfassend eine Trägerfolie und die erste Schicht oder die zweite Schicht und die Reflektionsschicht die zweite Schicht bzw. die erste Schicht direkt in die Oberfläche des Laminats eingeprägt wird, insbesondere mittels einer mechanisch wirkenden Prägewalze oder eines Prägestempels zur Erzeugung eines Oberflächenreliefs. Das Oberflächenrelief kann auch durch andere Einwirkungen direkt eingebracht, z.B. durch Laserablation. Hierdurch wird bewirkt, dass die nicht unerhebliche Schichtdicke des Trägersubstrats die Beabstandung der ersten Schicht von der Reflexionsschicht erhöht und somit das optische Erscheinungsbild des von dem Mehrschichtkörper generierten optisch variablen Effekts weiter verbessert werden kann, wie oben erwähnt.

Vorzugsweise weist das Trägersubstrat hierbei ein transparentes Fenster auf, welches zumindest teilweise in Überdeckung zum ersten, zweiten und/oder zu den weiteren Bereichen des Mehrschichtkörpers angeordnet ist.

Der Mehrschichtkörper kann jedoch weiter auch als Transferfolie oder Laminierfolie ausgebildet sein und in dieser Form beispielsweise auf das Trägersubstrat eines Sicherheits- oder Wertdokuments appliziert werden.

Im Folgenden wird die Erfindung anhand von mehreren Ausführungsbeispielen unter Zuhilfenahme der beiliegenden Zeichnungen beispielhaft erläutert.

Fig. 1 zeigt eine schematische Schnittdarstellung eines Mehrschichtkörpers.

Fig. 2a zeigt eine schematische Draufsicht auf eine Schicht des Mehrschichtkörpers nach Fig. 1.

Fig. 2b zeigt eine schematische Draufsicht auf eine Schicht des Mehrschichtkörpers nach Fig. 1.

Fig. 3a zeigt eine schematische Draufsicht auf eine Schicht des Mehrschichtkörpers nach Fig. 1 gemäß eines weiteren Ausführungsbeispiels.

Fig. 3b zeigt eine schematische Draufsicht auf eine Schicht des Mehrschichtkörpers nach Fig. 1 gemäß eines weiteren Ausführungsbeispiels.

Fig. 4 zeigt eine schematische Draufsicht auf den Mehrschichtkörper nach Fig. 1 gemäß eines weiteren Ausführungsbeispiels.

Fig. 5 zeigt eine schematische Schnittdarstellung eines Mehrschichtkörpers gemäß eines weiteren Ausführungsbeispiels.

Fig. 6 zeigt eine schematische Schnittdarstellung eines Mehrschichtkörpers gemäß eines weiteren Ausführungsbeispiels.

Fig. 7 zeigt eine schematische Schnittdarstellung eines Mehrschichtkörpers gemäß eines weiteren Ausführungsbeispiels.

Fig. 8 zeigt eine schematische Schnittdarstellung eines Mehrschichtkörpers gemäß eines weiteren Ausführungsbeispiels.

Fig. 9 zeigt eine schematische Schnittdarstellung eines Mehrschichtkörpers gemäß eines weiteren Ausführungsbeispiels.

Fig. 10 zeigt eine schematische Schnittdarstellung eines Mehrschichtkörpers gemäß eines weiteren Ausführungsbeispiels.

Fig. 11 zeigt eine schematische Schnittdarstellung eines Mehrschichtkörpers gemäß eines weiteren Ausführungsbeispiels.

Fig. 12a zeigt eine schematische Draufsicht auf einen Mehrschichtkörper.

Fig. 12b zeigt eine schematische Schnittdarstellung eines Mehrschichtkörpers.

Fig. 13 zeigt eine schematische Draufsicht auf eine Struktur für einen Mehrschichtkörper.

Fig. 14 zeigt eine schematische Schnittdarstellung eines Mehrschichtkörpers.

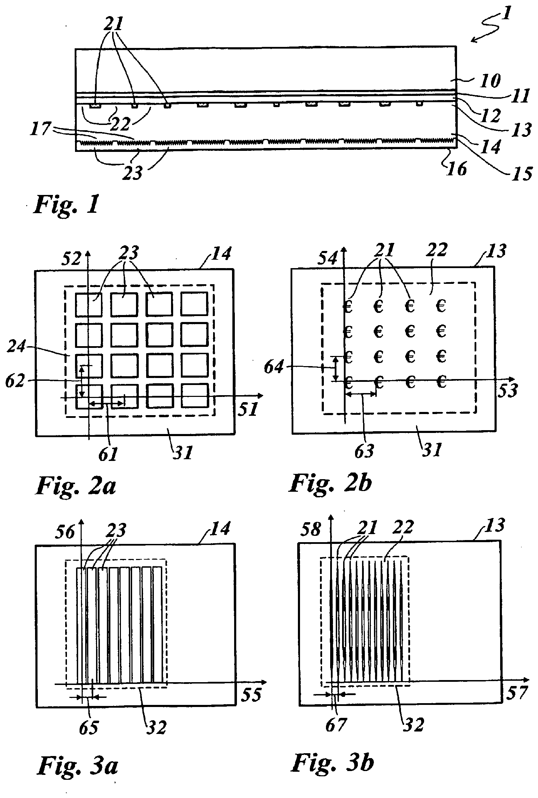

Fig. 1 zeigt eine schematische Schnittdarstellung eines Mehrschichtkörpers 1, bei dem es sich um eine Transferfolie handelt.

Der Mehrschichtkörper 1 weist eine Trägerfolie 10, eine Ablöseschicht 11, eine Schutzlackschicht 12, eine partielle Metallschicht 13, eine Replizierlackschicht 14, eine Metallschicht 15 und eine Kleberschicht 16 auf.

Die Trägerfolie 10 besteht aus einer Kunststofffolie, welche vorzugsweise eine Schichtdicke zwischen 6 und 125 μm aufweist, und welche vorzugsweise aus PET (Polyethylenterephthalat), PEN (Polyethylennaphthalat) oder BOPP (biaxially oriented polypropylene = biaxial gerecktes Polypropylen) besteht. Auf die Trägerfolie wird die Ablöseschicht 11 vorzugsweise mittels eines Druckverfahrens appliziert.

Die Ablöseschicht 11 enthält vorzugsweise Wachskomponenten und ermöglicht das Abtrennen der Trägerfolie 10 nach Applizieren der aus den Schichten 11 bis 16 bestehenden Transferlagen auf dem Zielsubstrat. Auf die Ablöseschicht 11 könnte hierbei auch verzichtet werden, wenn die Trägerfolie 10 und die Schutzlackschicht 12 in Bezug auf Ihre Materialeigenschaften so gewählt werden, dass die Adhäsionskräfte zwischen diesen Schichten geringer als die Adhäsionskräfte zwischen den nachfolgenden Schichten sind und damit ein Ablösen der Trägerfolie 10 von der Schutzlackschicht 11 ohne Zerstörung der darunter liegenden Schichtlage möglich ist.

Auf die Ablöseschicht 11 wird nun die Schutzlackschicht 12 vorzugsweise mittels eines Druckverfahrens aufgebracht.

Bei der Schutzlackschicht 12 handelt es sich um eine transparente Lackschicht einer Schichtdicke von vorzugsweise zwischen 1 und 3 μm. Auf die Schutzlackschicht 12 könnte auch verzichtet werden.

Die Metallschicht 13 weist Zonen 21 auf, in denen das Metall der Metallschicht vorgesehen ist und Zonen 22 auf, in denen das Metall der Metallschicht nicht vorgesehen wird. Zur Herstellung der partiellen Metallschicht 13 wird auf die Schutzlackschicht 12 vorzugsweise eine vollflächige Metallschicht beispielsweise aufgedampft oder aufgesputtert. Anschließend wird das Metall der Metallschicht in den Zonen 22 wieder entfernt. Dies kann beispielsweise durch Aufdrucken eines Ätzmittels in den Zonen 22, durch Aufdrucken eines Ätzresist in den Zonen 21 und anschließender Entfernung der Metallschicht 13 in den nicht mit dem Ätzresist geschützten Bereich in einem Ätzbad, durch ein ablatives Verfahren realisiert werden, beispielsweise durch Laser-Ablation, oder durch Aufbringen, Belichten, und Entwickeln eines Photoresists und anschließend Entfernen der Metallschicht in dem nicht von dem entwickelten Photoresist geschützten Bereich.

Die Schichtdicke der Metallschicht 13 beträgt hierbei vorzugsweise zwischen 10nm und 200nm.

Die ersten Zonen 21 sind in der Form von Mikrobildern ausgeformt, welche eine kleinste Abmessung von weniger als 100μm, vorzugsweise von weniger als 50μm aufweisen. Dies ist beispielhaft anhand der Figuren Fig. 2b und Fig. 3b erläutert. Die Figuren Fig. 2b und Fig. 3b zeigen beispielhaft zwei verschiedene Ausgestaltungen der Metallschicht 13 in einem Bereich 31 bzw. in einem Bereich 32. Kleinste Abmessung bedeutet insbesondere in Fig. 3b, dass mit dieser kleinsten Abmessung die gestauchte, geringste Ausdehnung der Mikrobilder gemeint ist, welche in der nicht gestauchten Ausdehnung erheblich größer sein können als die kleinste Abmessung.

Unter kleinster Abmessung einer Zone, eines Bildes oder eines Mikrobildes wird somit die Abmessung ausgewählt aus Länge und Breite verstanden, welche die kleinere ist. Bei komplexeren Formgebungen wird zur Bestimmung der Breite und Länge ein entsprechendes virtuelles Rechteck bestimmt, das so gewählt ist, dass die komplexe Formgebung innerhalb des Rechtecks angeordnet ist und möglichst viele der Grenzlinien der komplexeren Formgebung mit den Kanten des Rechtecks berühren.

In dem Bereich 31 sind eine Vielzahl von Zonen 21 vorgesehen, welche jeweils in Form eines das Zeichen "€" repräsentierenden Mikrobildes ausgeformt sind. Die ersten Zonen 21 sind hierbei von einer den Hintergrund bildenden zweiten Zone 22 umgeben, in der das Metall der Metallschicht 13 nicht vorgesehen ist. Die Schicht 13 setzt sich somit im Bereich 31 aus einer Vielzahl von Zonen 21 zusammen, in denen das Metall der Metallschicht vorgesehen ist und die Schicht 13 somit opak und reflektiv ist, und aus einer Zone 22, in der das Metall der Metallschicht 13 nicht vorgesehen ist und somit die Schicht 13 transparent ist. Die von den ersten Zonen 21 im Bereich 31 ausgebildeten Mikrobilder sind gemäß eines zweidimensionalen Mikrobildrasters angeordnet, wobei durch das Mikrobildraster ein Koordinatensystem mit einer Koordinatenachse 53 und einer hierzu rechtwinkligen Koordinatenachse 54 aufgespannt ist. Die benachbarten Mikrobilder weisen in dem in Fig. 2b gezeigten Fall in Richtung der Koordinatenachse 53 einen Mikrobildabstand 63 und in Richtung der Koordinatenachse 54 einen Mikrobildabstand 64 auf. Unter Mikrobildabstand wird hierbei die Beabstandung der Flächenschwerpunkte der benachbarten Zonen 21 verstanden. Der Mikrobildabstand 63 und der Mikrobildabstand 64 ist für das Mikrobild im Bereich 31 so gewählt, dass er jeweils < 300 μm ist. Der Mikrobildabstand 63 und/oder der Mikrobildabstand 64 kann jeweils für die zueinander benachbarten, in dem Bereich 31 angeordneten Mikrobilder konstant sein, sodass das Mikrobildraster in Richtung der Koordinatenachse 53 und/oder 54 eine konstante Rasterweite aufweist (wobei die Mikrobildabstände 63 und 64 unterschiedlich sein können). Es ist jedoch auch möglich, dass die Mikrobildabstände 63 und 64 zwischen benachbarten Mikrobildern sich im Bereich 31 unterscheiden, wie weiter unten auch erläutert.

Bei dem Ausführungsbeispiel nach Fig. 3b sind in dem Bereich 32 die Zonen 21 in Form von Mikrobildern ausgebildet, welche eine verzerrte Formgebung besitzen und welche gemäß einem eindimensionalen Raster angeordnet sind, welches ein Koordinatensystem mit einer Koordinatenachse 57 und einer hierzu rechtwinkligen Koordinatenachse 58 aufspannt. Die Zonen 21 sind hierbei von den Zonen 22 umgeben, welche die in Fig. 3b nicht mit schwarzer Farbe belegten Bereiche ausfüllen, sodass die Schicht 13 in dem Bereich 32 aus den Zonen 21 und den Zonen 22 besteht. Wie in Fig. 3b angedeutet, ist bei dem eindimensionalen Mikrobildraster lediglich in eine Raumrichtung, nämlich in Richtung der Koordinatenachse 57 eine Abfolge von Mikrobildern vorgesehen. Benachbarte Mikrobilder sind hierbei in einem Mikrobildabstand 67 voneinander beabstandet, wobei der Mikrobildabstand 67 für die Mikrobilder des Bereichs 32 jeweils konstant sein kann, sodass das Raster eine konstante Rasterweite aufweist. Es ist jedoch auch möglich, dass der Mikrobildabstand 67 zwischen benachbarten Mikrobildern im Bereich 32 unterschiedlich ist, wobei der Mikrobildabstand 67 jedoch jeweils < 300 μm zu wählen ist.

Die Mikrobilder im Bereich 32 weisen eine Breite von weniger als 100 μm, bevorzugt von 10 μm bis 50 μm auf. Die Länge der Mikrobilder, d.h. in dem in Fig. 3b gezeigten Fall die Erstreckung der Mikrobilder entlang der Koordinatenachse 58 ist > 300 μm gewählt und beträgt vorzugsweise mehr als 2 mm. Wie in Fig. 3b angedeutet, bestehen die Mikrobilder im Bereich 32 aus Mikrobildern, welche durch die Streckung der Längsachse eines Grundbildes gegenüber der Querachse eines Grundbildes durch eine Transformationsfunktion um mehr als das zehnfache gestreckt worden sind, beispielsweise um das 50- bis 100-fache gestreckt worden sind.

Im Folgenden wird nun die Replizierlackschicht 14 auf den Folienkörper umfassend die Schichten 10, 11, 12 und 13 aufgebracht, vorzugsweise aufgedruckt, oder vollflächig beschichtet.

Die Replizierlackschicht 14 weist eine Schichtdicke von 2 μm bis 50 μm, weiter bevorzugt von 5 μm bis 20 μm auf. Im Weiteren ist es auch möglich, dass die Schicht 14 aus mehreren Schichten besteht. So ist es beispielsweise möglich, dass die Schicht 14 eine Kernschicht beispielsweise mit einer Schichtdicke von 20 μm besitzt und eine hierauf aufgebrachte Lackschicht, die dann als eigentliche Replizierlackschicht dient, in welche Mikrostrukturen 17 abgeformt werden. Die Kernschicht kann hierbei auch aus einer transparenten Kunststofffolie, insbesondere einer transparenten Polyesterfolie bestehen. Diese Ausführungsform ist insbesondere für die Ausbildung von Schichten 14 mit einer Schichtdicke von mehr als 20 μm vorteilhaft.

In die von der Schicht 13 abgewandten Oberfläche der Replizierlackschicht 14, d. h. in die Grenzfläche zwischen die Replizierlackschicht 14 und die Metallschicht 15 sind in Zonen 23 jeweils die Mikrostrukturen 17 abgeformt, wie dies in Fig. 1 beispielhaft gezeigt ist. Bei der Replizierlackschicht 14 handelt es sich beispielsweise um eine Schicht aus einem transparenten, thermoplastischen Lack, in welchem mittels eines entsprechenden Prägestempels die Mikrostrukturen 17 unter Einwirkung von Hitze und Druck abgeformt werden. Weiter ist es auch möglich, dass die Replizierlackschicht 14 aus einem transparenten, UV-härtbaren Lack besteht, in welchen durch UV-Replikation die Mikrostrukturen 17 abgeformt sind.

Die Mikrostrukturen 17 sind in den Zonen 23 mit der Metallschicht 15 belegt, welche im Bereich der Zonen 23 eine Schichtdicke von vorzugsweise 10 nm bis 3 $\mu$m aufweist. Die Formgestaltung der Mikrostrukturen 17 in den Zonen 23 ist hierbei jeweils so gewählt, dass sie senkrecht in Bezug auf die von der ersten Schicht 13 aufgespannten Ebene aus Richtung der Schicht 13 im Bereich der jeweiligen dritten Zone 23 einfallendes Licht auf einen Bereich der Schicht 13 rückreflektiert und/oder rückbeugt, dessen Fläche um mindestens einen Faktor 10 bis 20 kleiner als die Fläche der jeweiligen Zone 23 ist (die Schichtdicke der Schicht 13 ist im Vergleich zu deren Länge/Breitevernachlässigbar, sodass die Schicht 13 eine Ebene aufspannt).

Die Zonen 23 und damit die Mikrostrukturen 17 sind gemäß eines Mikrostrukturrasters mit einer Beabstandung benachbarter Mikrostrukturen von weniger als 300 $\mu$m angeordnet, wie beispielhaft in Fig. 2a und Fig. 3a gezeigt.

Fig. 2a zeigt die Ausgestaltung der Schicht 14 in dem Bereich 31 und Fig. 3a zeigt die Ausgestaltung der Schicht 14 in dem Bereich 32. In dem Bereich 31 sind die Zonen 23 und damit die Mikrostrukturen 17 gemäß einem zweidimensionalen Mikrostrukturrasters angeordnet, welches ein Koordinatensystem mit einer Koordinatenachse 51 und einer hierzu rechtwinkligen Koordinatenachse 52 aufspannt. Bei diesem zweidimensionalen Raster folgen die Zonen 23 und damit die Mikrostrukturen 17 sowohl in Richtung der Koordinatenachse 51, als auch in Richtung der Koordinatenachse 52 aufeinander. In Richtung der Koordinatenachse 51 sind benachbarte Mikrostrukturen mit einem Mikrostrukturabstand 61 und in Richtung der Koordinatenachse 52 sind benachbarte Mikrostrukturen mit einem Mikrostrukturabstand 62 voneinander beabstandet. Unter Mikrostrukturabstand wird hierbei die Beabstandung der Flächenschwerpunkte der benachbarten Zonen 23 verstanden, in den die jeweiligen Mikrostrukturen 17 vorgesehen sind.

In dem Bereich 32 sind die Mikrostrukturen gemäß einem eindimensionalen Mikrostrukturraster angeordnet, welches ein Koordinatensystem mit einer Koordinatenachse 55 und einer hierauf rechtwinklig stehenden Koordinatenachse 56 aufspannt. Bei dem eindimensionalen Mikrostrukturraster folgen die Bereiche 23 und damit die Mikrostrukturen 17 lediglich in Richtung der Koordinatenachse 55 aufeinander, wobei benachbarten Mikrostrukturen einen Mikrostrukturabstand 65 aufweisen.

Im Weiteren gilt bezüglich der Mikrostrukturabstände 61, 62 und 65 das oben bereits bezüglich der Mikrobildabstände 63, 64 und 67 ausgeführte.

Bei den Mikrostrukturen 17 handelt es sich vorzugsweise um diffraktive Strukturen. Die Mikrostrukturen 17 in dem Bereich 31 bestehen hierbei vorzugsweise aus Mikrostrukturen, deren Spatialfrequenz im Flächenschwerpunkt der jeweiligen Zone 23 ein Minimum besitzt und mit zunehmendem Abstand von dem Flächenschwerpunkt sich in sämtliche Richtungen, d.h. sowohl in Richtung der Koordinatenachse 51 als auch in Richtung der Koordinatenachse 52 kontinuierlich erhöht. Die mittlere Spatialfrequenz der Mikrostruktur 17 im Bereich des Flächenschwerpunkts (in 5% der Fläche der jeweiligen Zone 23) beträgt vorzugsweise zwischen 0,1 Linien/mm und 50 Linien/mm und in den Randbereichen 23 zwischen 100 Linien/mm und 2000 Linien/mm. Im Weiteren ist es auch möglich, dass die Mikrostrukturen 17 sich nicht aus identischen Strukturelementen, beispielsweise rechteckförmigen Strukturelementen zusammensetzen, sondern sich die Strukturelemente der Mikrostrukturen 17 im Bereich der Zonen 23 unterscheiden und so beispielsweise sich die Flankenneigung hin zum Flächenschwerpunkt der jeweiligen Zone 23 orientierte Flanke eine Flankenneigung aufweist, welche im Bereich des Flächenschwerpunkts ein Minimum besitzt und sich in Richtung der Randbereiche der jeweiligen Zone 23 kontinuierlich erhöht, sich somit ausgehend vom Flächenschwerpunkt der jeweiligen Zone 23 sowohl in Richtung der Koordinatenachse 51 als auch in Richtung der Koordinatenachse 52 kontinuierlich erhöht. Weiter ist es auch möglich, dass die Mikrostruktur 17 von einem Kinoform oder einer im Wesentlichen in Reflexion wirkenden Mikrostruktur gebildet wird, welche die oben beschriebenen Abbildungseigenschaften besitzt. Weiter ist es auch möglich, dass die Mikrostruktur 17 von Fresnel-Zonenplatten gebildet wird, welche die oben beschriebenen Abbildungseigenschaften besitzen.

Die Strukturtiefe der Mikrostruktur 17 beträgt zwischen 100nm und 30um, bevorzugt zwischen 1 $\mu$m und 20$\mu$m.

Wie oben bereits erwähnt, definieren die Koordinatenachsen 51, 52, 53, 54, 55 und 57 die Raumrichtung, in der die Zonen 21 bzw. 23 aufeinander abfolgen. Es ist hierbei auch möglich, dass die Koordinatenachsen 51 bis 58 nicht, wie in den Figuren Fig. 2a bis 3b angedeutet, die Form von Geraden besitzen, sondern sie können auch eine beliebige andere, linienförmige Formgebung besitzen, so beispielsweise schlangenlinienförmig oder kreisförmig ausgebildet sein. Entsprechend folgen dann auch die Zonen 21 bzw. 23 aufeinander.

Die Koordinatenachsen 53 und 51 sowie 54 und 52 sowie die Koordinatenachsen 55 und 57 sind vorzugsweise (im Rahmen der Fertigungstoleranzen) parallel zueinander ausgerichtet. Es ist jedoch auch möglich, dass diese Koordinatenachsen zueinander einen Winkel zwischen 0° und 5° einschließen. Unabhängig von der Lage der Koordinatenachsen 51 bis 58 sind die Beabstandung benachbarter Mikrostrukturen und benachbarter Zonen 21 so gewählt, dass der Mikrostrukturabstand benachbarter Mikrostrukturen und der Mikrobildabstand benachbarter Mikrobilder, die benachbart zu diesen Mikrostrukturen angeordnet sind, sich in zumindest eine Raumrichtung im Bereich 31 bzw. 32 um nicht mehr als 10% unterscheidet.

Bei der oben beschriebenen Ausrichtung der Koordinatenachsen 51 bis 57 zueinander, ist es vorteilhaft, wenn sich der Mikrostrukturabstand 61 von dem Mikrobildabstand 63, der Mikrostrukturabstand 62 von dem Mikrobildabstand 64 sowie der Mikrostrukturabstand 65 von dem Mikrobildabstand 67 für benachbart angeordnete Mikrobilder/Mikrostrukturen um nicht mehr als 10%, bevorzugt zwischen 0,1 und 5% unterscheidet.

Die Mikrobilder und die Mikrostrukturen können in den Bereichen 31 und 32 identisch sein. Es ist jedoch auch möglich, dass die Mikrobilder und die Mikrostrukturen in den Bereichen 31 und 32 unterschiedlich sind. Besonders vorteilhaft ist hierbei, wenn sich die Mikrobilder/Mikrostrukturen im Verlauf des Bereiches 31 bzw. 32 kontinuierlich ändern. So kann sich die Formgebung der Mikrobilder beispielsweise gemäß einer Transformationsfunktion eines Grundbildes umfassend Drehung und/oder Vergrößerung oder Verkleinerung des Grundbildes und bei der Ausgestaltung nach Fig. 3b anschließender Verzerrung in Abhängigkeit von den Koordinaten der Koordinatenachsen 53, 54, 57 und 58 im Bereich 31 bzw. 32 kontinuierlich ändern. Ebenfalls können die Mikrostrukturen 17 in den Zonen 23 so gewählt sein, dass sich die Bereiche der Schicht 13, auf die das aus Richtung der ersten Schicht im Bereich der jeweiligen Zone 23 einfallende Licht rückreflektiert und/oder rückgebeugt wird, in ihrer Fläche, Breite und/oder Länge voneinander unterscheidet, insbesondere bestimmt ebenfalls durch eine Transformationsfunktion, welche von den Koordinaten von der Koordinatenachse 51 und 52 bzw. 55 abhängig ist. Durch diese Maßnahme können beim Kippen des Mehrschichtkörpers 1 interessante Bewegungs-, Vergrößerungs- und Verkleinerungseffekte von (dreidimensional) wirkenden Motiven erzielt werden, welche bei Betrachtung durch den menschlichen Betrachter beim Kippen des Mehrschichtkörpers 1 sichtbar werden.

So ist es beispielsweise möglich, folgende optische Effekte zu erzielen: es kann beispielsweise ein Flipp-Effekt generiert werden, bei dem bei Vor- und Rückwärtskippen zwischen zwei Bildern, beispielsweise einem geöffneten und einem geschlossenen Auge oder einem €-Zeichen und einer Ziffer gewechselt wird. Wenn der Mehrschichtkörper um eine andere Achse, beispielsweise von links nach rechts gekippt wird, zeigt sich ein zusätzlicher Bewegungseffekt.

Weiter kann beispielsweise eine Bewegungs- oder Transformationseffekt generiert werden: wenn der Mehrschichtkörper gekippt wird, dann ist eine Bewegung, beispielsweise ein sich drehender Propeller, eine laufenden Person oder sich bewegende Wolken sichtbar.

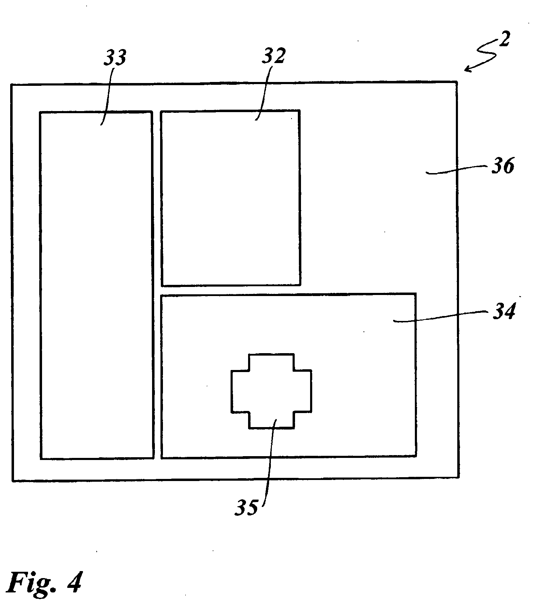

Weiter ist es auch möglich, dass Bereiche, in denen sich das durch die Zonen 21, 22 und 23 bestimmten Mikrobildraster und Mikrostrukturraster voneinander unterscheidet, benachbart zueinander nebeneinander angeordnet sind. So zeigt Fig. 4 eine Draufsicht auf einen Mehrschichtkörper 2 mit den Bereichen 32, 33 und Bereichen 34 und 35. In den Bereichen 32 bis 35 unterscheidet sich das Mikrobildraster und das Mikrostrukturraster jeweils voneinander, insbesondere in einem der Parameter ausgewählt aus der Gruppe Mikrobilderabstand, Mikrostrukturabstand und Ausrichtung der Koordinatenachse, welche von dem Mikrostrukturraster und dem Mikrobildraster aufgespannt sind. Das Mikrobildraster oder das Mikrostrukturraster kann auch in einzelnen Bereichen 32 bis 35 identisch sein, jedoch phasenverschoben zu den jeweils anderen Bereichen. In den Bereichen 34 und 35 sind so beispielsweise die Zonen 21, 22 und 23 gemäß einem Mikrostrukturraster und einem Mikrobildraster angeordnet, bei dem im Bereich 34 die Differenz des Mikrobildabstands und des Mikrostrukturabstands positiv und in dem Bereich 35 negativ ist. Hierdurch wird eine gegenläufige Bewegung des sich beim Kippen zeigenden Motivs in den Bereichen 34 und 35 bewirkt.

Zusätzlich ist eine vorteilhafte Kombination von Bereichen mit Bewegungseffekten mit benachbarten statischen Bereichen möglich, um als optische Referenz für den Bewegungseffekt zu dienen. Beispielweise können das Bewegungseffekte in den Bereichen 32 bis 35 sein und ein statischer umgebender Bereich 36 oder ein Bewegungseffekt im Bereich 35 mit einem diesen umgebenden Bereich 34 ohne Bewegungseffekt.

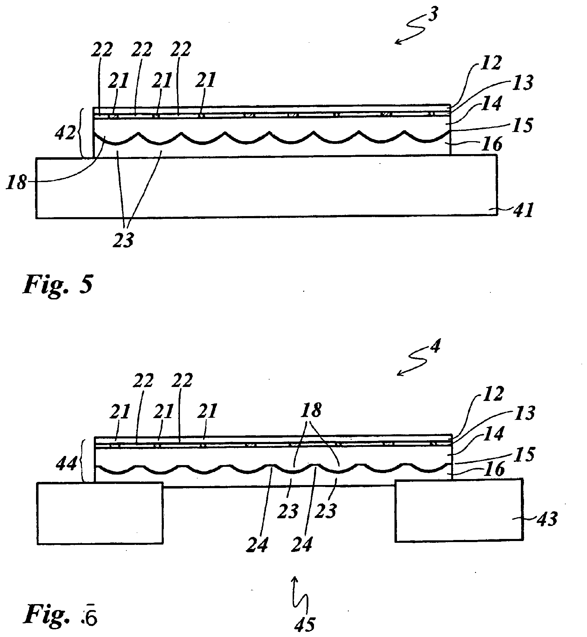

Fig. 5 zeigt einen Mehrschichtkörper 3, welcher ein Wertdokument, beispielsweise eine Banknote bildet. Der Mehrschichtkörper 3 weist ein Trägersubstrat 41 sowie die Schicht 12, 13, 14, 15 und 16 nach Fig. 1 auf. Die Schichten 12, 13, 14, 15, 16 bilden ein Folienelement 42 aus, welches beispielsweise mittels der in Fig. 1 gezeigten Transferfolie auf das Trägersubstrat 41 appliziert wird. Die Mikrostrukturen 17 nach Fig. 1 sind bei dem Mehrschichtkörper 3 nach Fig. 5 durch Mikrostrukturen 18 ersetzt, welche die in Bezug auf die Mikrostrukturen 17 oben erläuterten Ablenkungseigenschaften besitzen, jedoch im Wesentlichen in Reflexion wirken. Die Mikrostrukturen 18 sind in der in Fig. 5 gezeigten Ausführung als reflektiv wirkende Freiformflächen ausgestaltet, die insbesondere gewölbte Hohlspiegel bilden und dadurch insbesondere einen Vergrößerungs-, Verkleinerungs- oder Verzerrungseffekt in Bezug auf das Mikrobildraster 21, 22 erzeugen. Die Mikrostrukturen 18 können einen halb-zylinderformigen (wie in Fig. 5 dargestellt), trapezoidförmigen oder auch dreieckförmigen Querschnitt bzw. Profilform aufweisen.

Es kann vorgesehen sein, dass die als Freiformflächen ausgebildeten Mikrostrukturen glatte, spiegelnd reflektierende Oberflächenbereiche und/oder diffraktiv wirkende Oberflächenbereiche aufweisen. Die diffraktiven Oberflächenbereiche können als Muster auf einem als Hintergrund ansonsten glatt spiegelnd reflektierenden Oberflächenbereich oder auf einem Oberflächenbereich mit einer vom Muster unterschiedlichen diffraktiven Struktur angeordnet sein und so ein Motiv bilden. Beispielsweise können die benachbarten Flanken einer im Querschnitt oder Profil halb-zylinderformigen, trapezoidförmigen oder auch dreieckförmigen geformten Mikrostruktur unterschiedliche diffraktive Motive aufweisen, wodurch bei unterschiedlichen Blickwinkeln ein Bildwechsel-Effekt generiert werden kann. Die Relieftiefe der Mikrostrukturen 18 beträgt hierbei vorzugsweise zwischen 3 μm und 50 μm, weiter bevorzugt zwischen 3 μm und 30 μm. Im Weiteren entspricht die Ausgestaltung der Schichten 12 bis 16 sowie die Anordnung und Lage der Schichten 12 bis 16 zueinander dem oben in Bezug auf die Figuren Fig. 1 bis Fig. 4 Erläuterten.

Fig. 6 zeigt einen weiteren Mehrschichtkörper 4, bei dem es sich ebenfalls um ein Sicherheits- oder Wertdokument handelt. Der Mehrschichtkörper 4 weist ein Trägersubstrat 43 auf, welches ein transparentes Fenster in Form einer Durchbrechung 45 aufweist. Im Bereich der fensterförmigen Durchbrechung 45 ist ein Folienelement 44 appliziert, welches die Schichten 12, 13, 14, 15 und 16 umfasst. Der Aufbau des Folienelements 44 entspricht dem Aufbau des Folienelements 42 mit dem Unterschied, dass die Metallschicht 15 nicht vollflächig, sondern lediglich im Bereich der Zonen 23 vorgesehen ist und zwischen den Zonen 23 Zonen 24 vorgesehen sind, in denen das Metall der Metallschicht 15 nicht vorgesehen ist. Im Bereich der Zonen 24 ist das Folienelement 44 und damit der Mehrschichtkörper 4 transparent ausgebildet, sodass sich bei Durchlichtbetrachtung weitere optisch variable Effekte zeigen.

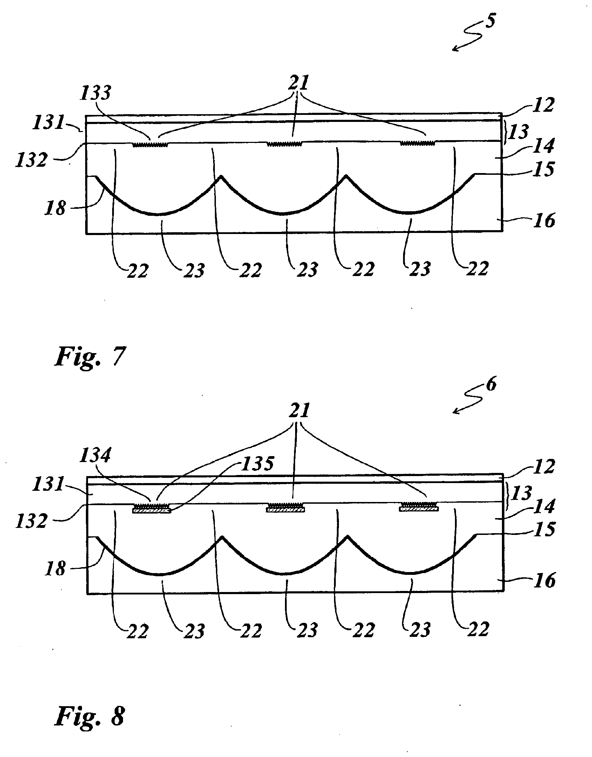

Fig. 7 zeigt einen Mehrschichtkörper 5, welcher die Schichten 12, 13, 14, 15 und 16 umfasst. Die Schichten 12, 14, 15 und 16 sind wie in Bezug auf diese Schichten oben bei den Figuren Fig. 1 bis Fig. 4 erläutert ausgebildet, mit dem Unterschied, dass die Mikrostrukturen 17 durch die Mikrostrukturen 18 nach Fig. 5 oder Fig. 6 ersetzt sind. Bezüglich der Ausgestaltung und Anordnung dieser Schichten wird so auf obige Ausführungen verwiesen.

Die Schicht 13 wird im Gegensatz zu der Schicht 13 des Mehrschichtkörpers 1 nicht von einer einzigen Schicht, sondern von zwei übereinander angeordneten Teilschichten, den Teilschichten 131 und 132 gebildet. Bei der Teilschicht 131 handelt es sich um eine transparente Replizierlackschicht, bei der im Bereich der Zonen 21 eine Reliefstruktur 133 abgeformt ist. Bei der Teilschicht 132 handelt es sich um eine partielle Metallschicht, welche wie die Schicht 13 nach Fig. 1 ausgebildet ist, d.h. das Metall der Metallschicht 132 ist in den Zonen 21 vorgesehen und in den Zonen 22 nicht vorgesehen. Die Metallschicht wirkt als Reflexionsschicht für die Reliefstruktur 133. Bei der Teilschicht 132 kann es sich auch um eine andere reflektionserhöhende Schicht handeln oder um eine Schicht, die in Bezug auf die Schicht 131 einen um mindestens 0,5, vorzugsweise um 1,0 abweichenden Brechungsindex aufweist, wodurch die Reliefstruktur 133 in Reflektion durch das an der Teilschicht 132 reflektierte Licht sichtbar ist.

Weiter ist es auch möglich, dass auf die Replizierlackschicht 131 verzichtet wird und die Reliefstrukturen 133 sowie die Mikrostrukturen 18 in eine gemeinsame Replizierschicht abgeformt werden, die von der Schicht 14 gebildet wird.

Bei der Reliefstruktur 133 handelt es sich vorzugsweise um eine diffraktive Struktur, beispielsweise um ein Hologramm oder eine Kinegram®-Struktur. Die beim Kippen des Mehrschichtkörpers 5 entstehen Bewegungs-, Verkleinerungs-, Vergrößerungs- und Transformationseffekte werden so für Motive bewirkt, welche bereits an sich einen optisch variablen Eindruck vermitteln, sodass sehr eindrucksvolle und prägnante Sicherheitsmerkmale mit dem Mehrschichtkörper 5 bereitgestellt werden können. Die Reliefstruktur 133 kann auch eine refraktiv wirkende Struktur aufweisen, z. B. eine linsenartig ausgeformte Struktur mit halb-zylinderförmigem, trapezoidförmigem oder dreieckförmigem Profil bzw. Querschnitt. Die Reliefstruktur 133 kann auch eine Kombination oder eine Überlagerung einer diffraktiven Feinstruktur mit einer refraktiven Grobstruktur sein, wobei die Feinstruktur und die Grobstruktur voneinander abweichende Rasterabstände aufweisen können. Die Feinstruktur und die Grobstrukturen können in separaten (Kombination) Replizierlackschichten oder in einer gemeinsamen (Überlagerung) Replizierlackschicht abgeformt sein. Vorzugsweise ist die Abweichung der Rasterabstände vergleichsweise groß, z. B. weist die Feinstruktur einen Rasterabstand ähnlich dem Mikrostrukturraster auf, wohingegen die Grobstruktur einen Rasterabstand aufweist, der etwa um den Faktor 1,5 oder 2 oder 3 größer als das Mikrostrukturraster ist. Ist die Grobstruktur als Flächenmuster über dem Raster der Feinstruktur aufgebracht, lassen sich damit musterförmige, insbesondere makroskopische Flächenbereiche definieren, in welchen sich Grobstruktur, Feinstruktur und Mikrostrukturen 18 unterschiedlich überlagern und dadurch unterschiedliche optische Effekte zeigen können.

Fig. 8 zeigt einen Mehrschichtkörper 6, welcher die Schichten 12, 13, 14, 15 und 16 aufweist. Die Schichten 12 bis 16 entsprechen eher ihrem Aufbau und ihrer Anordnung den Schichten 12 bis 16 nach Fig. 7 mit dem Unterschied, dass die Schicht 13 neben den Teilschichten 131 und 132 eine Teilschicht 135 aufweist und eine sich von der Reliefstruktur 133 unterscheidende Reliefstruktur 134 in die Teilschicht 131 abgeformt ist. Bei der Schicht 135 handelt es sich um eine reflektive Deckschicht, beispielsweise um eine reflektive Farbschicht, welche im Bereich der Zonen 21 vorgesehen und im Bereich der Zonen 22 nicht vorgesehen ist. Durch diese Schicht wird bewirkt, dass der optische Effekt der Reliefstrukturen 134 aus Richtung der Schicht 14 nicht bewirkt wird, sodass der optische Effekt der Reliefstrukturen 134 lediglich einen Hintergrund für den von dem Mehrschichtkörper 6 gebildeten optisch variablen Effekt (Bewegungs-, Verkleinerungs-, Vergrößerungs- und Transformationseffekte) bildet. Die Reliefstruktur 134 wird vorzugsweise ebenfalls von einem Hologramm oder einer Kinegram®-Struktur gebildet, welches sich optisch mit dem von der Schicht 135, 14 und 15 gebildeten optisch variablen Effekt überlagert. Weiter ist es auch möglich, dass die Reliefstruktur 134 von einer Reliefstruktur mit einem Tiefen-zu-Breiten-Verhältnis von mehr als 0,5 und einer Spatialfrequenz von mehr als 1500 Linien/mm gebildet wird, welche bewirkt, dass das von der Oberseite der Zonen 21 rückreflektierte Licht minimiert wird und so der Kontrast und die Lichtstärke des von dem Mehrschichtkörper 6 generierten, optisch variablen Effekts verbessert wird.

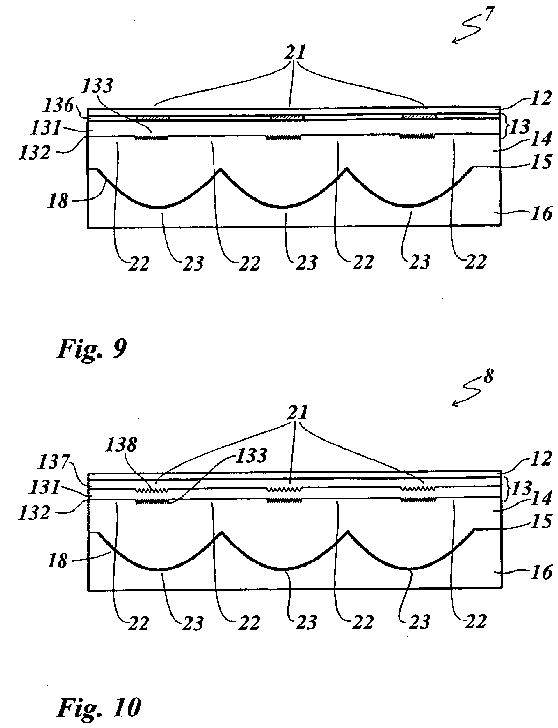

Fig. 9 zeigt einen Mehrschichtkörper 7, welcher die Schichten 12, 13, 14, 15 und 16 aufweist. Die Schichten 12, 13, 14, 15 und 16 sind wie die Schichten 12, 13, 14, 15 und 16 nach Fig. 7 ausgebildet, mit dem Unterschied, dass die Schicht 13 neben den Teilschichten 131 und 132 noch die Teilschicht 136 umfasst. Bezüglich der Ausgestaltung und Anordnung dieser Schichten wird so auf die obige Ausführung verwiesen. Die Teilschicht 136 wird von einer Abdeckschicht, beispielsweise einer Farblackschicht gebildet, wobei die Abdeckschicht, beispielsweise der Farblack, in den Zonen 21 vorgesehen und in den Zonen 22 nicht vorgesehen ist. Hierdurch wird verhindert, dass der in den Zonen 22 von der Reliefstruktur 133 generierte optische Effekt auf der Oberseite der Schicht 13 sichtbar ist und somit lediglich Einfluss auf die Motive besitzt, die von den Schichten 131, 132, 14 und 15 generiert werden.

Fig. 10 zeigt einen Mehrschichtkörper 8 mit dem Schichten 12, 13, 14, 15 und 16. Die Schichten 12, 13, 14, 15 und 16 sind wie die Schichten 12, 13, 14, 15 und 16 nach Fig. 7 ausgebildet, mit dem Unterschied, dass die Schicht 13 neben den Teilschichten 131 und 132 die Teilschicht 137 aufweist. Bezüglich der Ausgestaltung und Anordnung der Schichten 12, 13, 14, 15 und 16 wird so auf obige Ausführung verwiesen.

Die Teilschicht 137 besteht aus einer Replizierlackschicht und einer im Bereich der Zonen 21 vorgesehenen reflektiven Schicht, wobei im Bereich der Zonen 21 weiter eine Reliefstruktur 138 in die Grenzschicht zwischen der Replizierlackschicht und der Reflektionsschicht abgeformt ist. Weiter ist es auch möglich, dass die Reliefstruktur 138 in die Oberseite der Teilschicht 131 abgeformt ist und die Teilschicht 137 aus einer Metallschicht besteht, wobei das Metall der Metallschicht in den Zonen 21 vorgesehen und in den Zonen 22 nicht vorgesehen ist. Bei den Reliefstrukturen 133 und 138 handelt es sich vorzugsweise um unterschiedliche, diffraktive Strukturen, beispielsweise unterschiedliche Hologramme und/oder Kinegram®-Struktur.

Bei dem Folienkörper 8 wird durch die Reliefstruktur 138 zum Einen ein optisch variabler Hintergrundeffekt vor dem von den Schichten 131, 132, 14 und 15 bewirkten optisch variablen Effekt bewirkt (Überlagerung) und zum Anderen der bereits anhand von Fig. 7 erläuterte optisch variable Effekt generiert, bei dem der dem durch die Strukturierung der Schicht 13 und den Schichten 14 und 15 generierten optisch variable Effekt als Grundmotiv bereits ein optisch variables Motiv zugrunde gelegt wird.

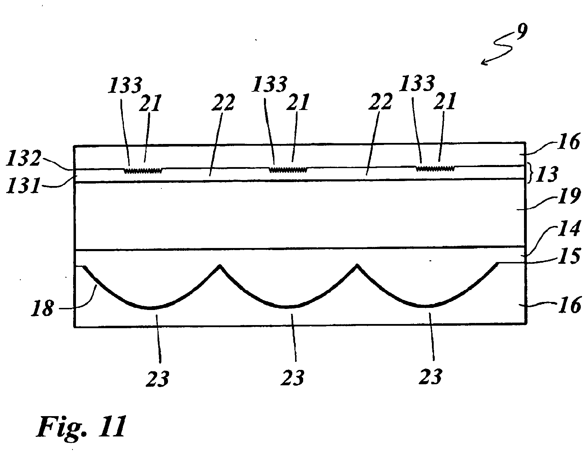

Fig. 11 zeigt einen Mehrschichtkörper 9 mit den Schichten 16, 13, 14, 15 und 16 sowie einer Schicht 19, bei der es sich um eine aus Kunststoff bestehende Trägerfolie, insbesondere um eine Polyesterfolie handelt. Die Trägerfolie 19 besitzt vorzugsweise eine Dicke zwischen 6 und 100 μm, insbesondere von ca. 20 μm bis 50 μm.

Die Schichten 16, 13, 14, 15, 16 sind wie bei Fig. 7 erläutert ausgebildet und es wird auf die diesbezüglichen obigen Ausführungen verwiesen.

Bei dieser Ausführungsform ist die Trägerfolie 19 beidseitig mit Replizierlackschichten, den Schichten 14 und 131 belegt. In die Replizierlackschichten 14 und 131 sind die Mikrostrukturen 18 bzw. in den Zonen 21 Reliefstrukturen 133 abgeformt. Weiter sind die Mikrostrukturen 18 mit einer metallischen Reflektionsschicht 15 und die Reliefstrukturen 133 in den Zonen 21 mit dem Metall der partiellen Metallschicht 132 belegt. Der so gebildete Mehrschichtkörper ist dann beidseitig mit der Kleberschicht 16 versehen.

Der sich so ergebende Folienkörper 9 zeichnet sich durch eine besondere Robustheit aus und kann beispielsweise als Sicherheitsfaden oder Sicherheitsstreifen mit den bekannten Verfahren in das Trägersubstrat einer Banknote, beispielsweise in das Banknotenpapier eingebracht werden. Nach Einbringen des Folienkörpers 9 in das Trägersubstrat der Banknote kann dieser nur schwer wieder von dem Trägersubstrat ohne Zerstörung des Trägersubstrats und des Folienkörpers 9 entfernt werden, sodass das sicher ergebende Sicherheitsdokument über eine hohe Fälschungssicherheit verfügt.

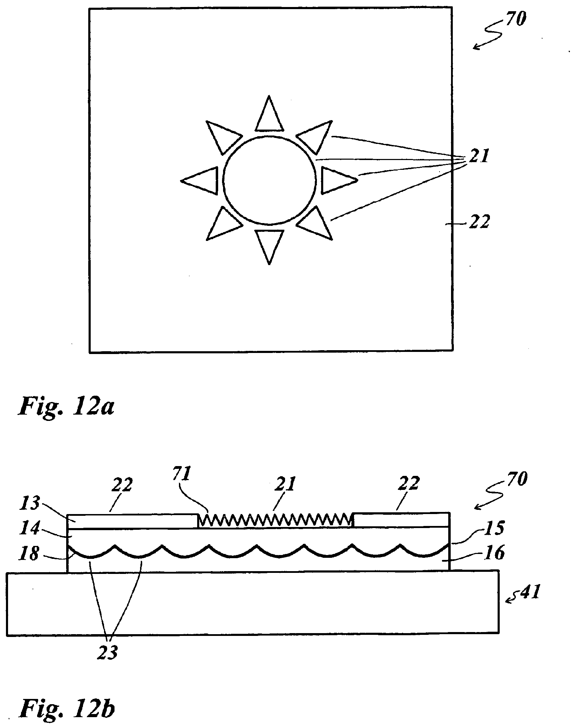

Im Weiteren kann der Folienkörper 9 nach Fig. 11 beispielsweise auch als Transferfolie ausgebildet sein. Hierzu wird die obere Kleberschicht 16, d.h. die oberhalb der Schicht 13 gelegene Kleberschicht 16 durch die Schichten 10 bis 12 nach Fig. 1 ersetzt, d.h. auf die Schicht 13 folgt die optionale Schutzlackschicht 12, die Ablöseschicht 11, sowie die Trägerfolie 10. Fig. 12a und Fig. 12b verdeutlichen den prinzipiellen Aufbau eines weiteren Mehrschichtkörpers 70. Fig. 12b zeigt einen Mehrschichtkörper 70, welcher auf einem Trägersubstrat 41 beispielsweise einer Banknote aufgebracht ist. Der Mehrschichtkörper 70 weist eine Schicht 13, eine Replizierlackschicht 14, eine Metallschicht 15 und eine Kleberschicht 16 auf. In Zonen 23 sind die Mikrostrukturen 18 abgeformt.

Die Schichten 14, 15 und 16 sowie die Mikrostrukturen 18 sind wie oben anhand der vorgehenden Figuren Fig. 1 bis Fig. 11 beschrieben ausgebildet, wobei die Mikrostrukturen 18 auch durch die oben beschriebenen Mikrostrukturen 17 ersetzt sein können. Bezüglich der Details der möglichen Ausgestaltung dieser Schichten wird somit auf die vorgehenden Ausführungen verwiesen.

Bei der Schicht 13 handelt es sich um eine transparente Replizierlackschicht. Diese Schicht weist Zonen 21 und Zonen 22 auf. Die Zonen 21 sind in Form von Bildern ausgeformt, welche Teilbilder des in Fig. 12a gezeigten Gesamtbildes darstellen. Die Zonen 21 weisen hierbei eine kleinste Abmessung von mehr als 300 $\mu$m, bevorzugt von mehr als 3 mm auf und sind somit für den menschlichen Betrachter sichtbar.

In den Zonen 21 sind, wie in Fig. 12b angedeutet, Strukturen 71 in die Schicht 13 abgeformt. Bei den Strukturen 71 kann es sich um die gleichen Strukturen wie oben in Bezug auf die Mikrostrukturen 17 und 18 sowie die Reliefstrukturen 133 und 134 beschrieben handeln.

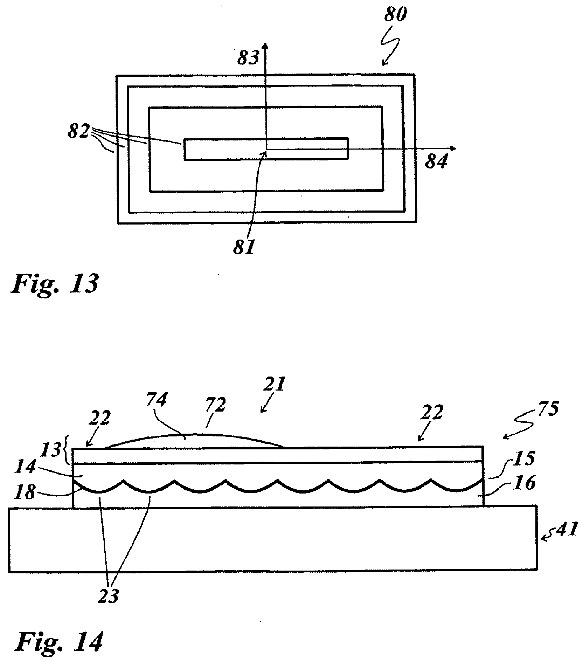

Bevorzugt handelt es sich bei den Strukturen 71 hierbei um eine diffraktive Struktur, deren Spatialfrequenz über dem Flächenbereich der jeweiligen Zone 21 variiert. Die Variation der Spatialfrequenz ist hierbei vorzugsweise wie in Fig. 13 verdeutlicht gewählt:

Fig. 13 zeigt eine schematische Draufsicht auf eine Struktur 80, welche eine rechteckförmig ausgeformte Zone 21 ausfüllt. Die Linien 82 verdeutlichen die Linie von Extremwerten der Struktur 80, sodass sich aus der Beabstandung der Linien 82 zueinander die jeweils örtliche Spatialfrequenz der Struktur 80 ergibt. Weiter ist in Fig. 13 der Flächenschwerpunkt 81 der Zone 21 markiert. Ausgehend von dem Flächenschwerpunkt 81 erhöht sich - wie aus Fig. 13 hervorgeht - somit in sämtliche Raumrichtungen und auch in die Raumrichtungen 83 und 84 somit die Spatialfrequenz der Struktur 80. Wie in Fig. 13 gezeigt, ist diese Erhöhung der Spatialfrequenz hierbei vorteilhafterweise so gewählt, dass die Linien 82, d.h. die Extremwerte der Reliefstruktur 82 parallel zueinander orientiert sind.

Fig. 14 zeigt einen Mehrschichtkörper 75, welcher auf dem Substrat 41 aufgebracht ist. Der Mehrschichtkörper 75 ist wie der Mehrschichtkörper 70 nach Fig. 12b aufgebaut, bis auf dass die Schicht 13 hier eine transparente Lackschicht und eine darauf aufgedruckte transparente Schicht 74 aufweist. Die Schicht 74 ist hierbei, aufweisend eine Reliefstruktur 72, derart auf die darunter liegenden Schichten des Mehrschichtkörpers 75 aufgedruckt, dass die Oberfläche dieser Schicht 74 - wie in Fig. 14 gezeigt - in den Zonen 21 eine linsenförmige Formgebung besitzt.

Von besonderem Vorteil ist weiter, wenn die transparente Schicht 13 in den Zonen 21 eingefärbt ist oder eine gegenüber den Zonen 22 verringerte oder erhöhte Transparenz aufweist und damit die Schicht 13 in den Zonen 21 und in den Zonen 22 eine unterschiedliche Filterwirkung im Bereich des für das menschliche Auge sichtbaren Lichtes besitzt.

**Patentansprüche**

1.  Mehrschichtkörper (1 bis 9), insbesondere mehrschichtiges Sicherheitselement zur Sicherung von Sicherheitsdokumenten, mit einer ersten Schicht (13) mit einer Vielzahl von opaken und/oder reflektiven ersten Zonen (21), die jeweils durch ein oder mehrere transparente zweite Zonen (22) voneinander getrennt sind, wobei die ersten Zonen (21) als Mikrobilder mit einer kleinsten Abmessung von weniger als 100 $\mu$m ausgeformt sind und gemäß einem Mikrobildraster mit einer Beabstandung benachbarter Mikrobilder in einer ersten Raumrichtung von weniger als 300 $\mu$m angeordnet sind, wobei durch das Mikrobildraster ein erstes Koordinatensystem mit einer Koordinatenachse x1 (53, 57) und einer hierzu rechtwinkeligen Koordinatenachse y1 (54, 58) aufgespannt ist, mit einer unterhalb der ersten Schicht (13) angeordneten zweiten Schicht (14) aus einem transparenten Material, und mit einer unterhalb der zweiten Schicht (14) angeordneten Reflexionsschicht (15), wobei die zweite Schicht (14) eine Vielzahl von dritten Zonen (23) aufweist, in denen jeweils eine Mikrostruktur (17, 18) in die von der ersten Schicht abgewandte Grenzfläche der zweiten Schicht (14) zur Reflexionsschicht abgeformt ist, die mit der Reflexionsschicht (15) belegt ist, wobei die Mikrostrukturen (17, 18) gemäß einem Mikrostrukturraster mit einer Beabstandung benachbarter Mikrostrukturen in einer zweiten Raumrichtung von weniger als 300 $\mu$m angeordnet sind, durch welches ein zweites Koordinatensystem mit einer Koordinatenachse x2 (51, 55) und einer hierzu rechtwinkeligen Koordinatenachse y2 (52, 56) aufgespannt ist und wobei in einem ersten Bereich (31, 32) des Mehrschichtkörpers die Mikrobilder des Mikrobildrasters und die Mikrostrukturen des Mikrostrukturrasters sich überlagernd in fester Lage zueinander angeordnet sind und der durch die Beabstandung der Flächenschwerpunkte benachbarter dritter Zonen (23) bestimmte Mikrostrukturabstand (61, 62) und der durch die Beabstandung der Flächenschwerpunkte benachbarter erster Zonen (21) bestimmte Mikrobildabstand (63, 64, 67) sich voneinander in zumindest einer dritten Raumrichtung im ersten Bereich (31, 32) um nicht mehr als 10 % unterscheidet, **dadurch gekennzeichnet,**
    **dass** jede der Mikrostrukturen (17, 18) so ausgestaltet ist, dass sie senkrecht in Bezug auf die von der ersten Schicht aufgespannte Ebene aus Richtung der ersten Schicht im Bereich der jeweiligen dritten Zone (23) einfallendes Licht auf einen Bereich der ersten Schicht rückreflektiert und/oder rückbeugt, dessen Fläche um mindestens den Faktor 10 kleiner als die Fläche der jeweiligen dritten Zone (23) ist, und dass im ersten Bereich (31, 32) die von den ersten Zonen (21) belegte Fläche mindestens um den Faktor 4 kleiner als die von den dritten Zonen (23) belegte Fläche ist, und dass in der zur zweiten Schicht (14) orientierten unteren Grenzfläche der ersten Schicht (13) in den ersten Zonen (21) eine erste diffraktive Oberflächenstruktur (133) abgeformt ist.

2.  Mehrschichtkörper (70, 75), insbesondere mehrschichtiges Sicherheitselement zur Sicherung von Sicherheitsdokumenten, mit einer ersten Schicht (13) mit ein oder mehreren transparenten ersten Zonen (21), die jeweils durch ein oder mehrere transparente zweite Zonen (22) voneinander getrennt sind, wobei die erste Schicht (13) so ausgestaltet ist, dass die ersten und die zweiten Zonen ein unterschiedliches Transmissionsverhalten für das einfallende Licht besitzen, insbesondere unterschiedlich eingefärbt sind, unterschiedliche Transmissivität besitzen und/oder das einfallende Licht unterschiedlich ablenken, mit einer unterhalb der ersten Schicht (13) angeordneten zweiten Schicht (14) aus einem transparenten Material, und mit einer unterhalb der zweiten Schicht (14) angeordneten Reflexionsschicht (15), wobei die zweite Schicht (14) eine Vielzahl von dritten Zonen (23) aufweist, in denen jeweils eine Mikrostruktur in die von der ersten Schicht abgewandten Grenzfläche der zweiten Schicht zur Reflexionsschicht abgeformt ist, die mit der Reflexionsschicht belegt ist,
wobei die Mikrostrukturen (17, 18) gemäß einem Mikrostrukturraster mit einer Beabstandung benachbarter Mikrostrukturen in einer zweiten Raumrichtung von weniger als 300 $\mu$m angeordnet sind, durch welches ein zweites Koordinatensystem mit einer Koordinatenachse x2 (51, 55) und einer hierzu rechtwinkeligen Koordinatenachse y2 (52, 56) aufgespannt ist,
**dadurch gekennzeichnet,**
**dass** jede der Mikrostrukturen (17, 18) so ausgestaltet ist, dass sie senkrecht in Bezug auf die von der ersten Schicht aufgespannten Ebene aus Richtung der ersten Schicht im Bereich der jeweiligen dritten Zone einfallendes Licht auf einen Bereich der ersten Schicht rückreflektiert und/oder rückbeugt, dessen Fläche um mindestens den Faktor 10 kleiner als die Fläche der jeweiligen dritten Zone (23) ist, und dass im ersten Bereich (31, 32) die von den ersten Zonen (21) belegte Fläche mindestens um den Faktor 4 kleiner als die von den dritten Zonen (23) belegte Fläche ist, und dass in der zur zweiten Schicht (14) orientierten unteren Grenzfläche der ersten Schicht (13) in den ersten Zonen (21) eine erste diffraktive Oberflächenstruktur (133) abgeformt ist.

3. Mehrschichtkörper nach Anspruch 2,
**dadurch gekennzeichnet,**
**dass** die erste Schicht (13) in den ein oder mehreren ersten Zonen (21) jeweils eine erste diffraktive oder refraktive Struktur (71, 72) zur Ablenkung des einfallenden Lichts aufweist, welche in eine Oberfläche der ersten Schicht (13) oder eine Oberfläche einer Teilschicht der ersten Schicht abgeformt ist, und dass die erste Schicht (13) in den ein oder mehreren zweiten Zonen (22) jeweils keine diffraktive oder refraktive Struktur zur Ablenkung des einfallenden Lichts aufweist oder eine zweite diffraktive oder refraktive Struktur zur Ablenkung des einfallenden Lichts aufweist, welche sich von der ersten Struktur (71, 72) unterscheidet und in eine Oberfläche der ersten Schicht oder einer Oberfläche einer Teilschicht der ersten Schicht abgeformt ist.

4. Mehrschichtkörper (1 bis 9) nach einem der vorgehenden Ansprüche,
**dadurch gekennzeichnet,**
**dass** im ersten Bereich (31, 32) der Flächenanteil der ersten Zonen (21) an der Gesamtfläche der ersten und zweiten Zonen (21, 22) zwischen 20 % und 10 % beträgt und/oder dass im ersten Bereich (31, 32) die von den ersten Zonen (21) belegte Fläche um den Faktor 10 bis 20 kleiner als die von den dritten Zonen (23) belegte Fläche ist.

5. Mehrschichtkörper (1 bis 9) nach einem der vorgehenden Ansprüche,
**dadurch gekennzeichnet,**
**dass** die Mikrostrukturen (17, 18) jeweils so ausgebildet sind, dass sie senkrecht in Bezug auf die von der ersten Schicht aufgespannten Ebene aus Richtung der ersten Schicht im Bereich der jeweiligen dritten Zonen (23) einfallendes Licht auf einen Bereich der ersten Schicht rückreflektieren und/oder rückbeugen, dessen Fläche zwischen 10 und 10.000 mal kleiner, insbesondere zwischen 15 und 2.500 mal kleiner als die Fläche der jeweiligen dritten Zone (23) ist.

6. Mehrschichtkörper (1) nach einem der vorgehenden Ansprüche,
**dadurch gekennzeichnet,**
**dass** die Mikrostrukturen (17) diffraktive Strukturen mit einer Spatialfrequenz von mehr als 300 Linien/mm oder jeweils Kinoforme sind, und/oder dass die Spatialfrequenz der Mikrostrukturen (17) im Bereich des Flächenschwerpunkts der jeweiligen dritten Zonen (23) ein Minimum besitzt und sich die Spatialfrequenz der Mikrostruktur ausgehend von dem Flächenschwerpunkt in zumindest eine Raumrichtung erhöht, oder dass sich die Flankenneigung der zum Flächenschwerpunkt der jeweiligen dritten Zone orientierten Flanke der Strukturelemente der Mikrostruktur (17) ausgehend von dem Flächenschwerpunkt in zumindest eine Raumrichtung erhöht, oder dass die lokale Strukturtiefe, mit der die Mikrostruktur in die zweite Schicht (14) abgeformt ist, sich ausgehend von dem Flächenschwerpunkt der jeweiligen dritten Zonen in zumindest eine Raumrichtung erniedrigt.

7. Mehrschichtkörper (4) nach einem der vorgehenden Ansprüche,
**dadurch gekennzeichnet,**
**dass** jede der dritten Zonen (23) von ein oder mehreren vierten Zonen (24) umgeben ist, in denen die Reflexionsschicht (15) nicht vorgesehen ist und insbesondere der Mehrschichtkörper (4) in den vierten Zonen (24) transparent ausgebildet ist.

8. Mehrschichtkörper (5, 7, 8) nach einem der vorgehenden Ansprüche,
**dadurch gekennzeichnet,**
**dass** in den zweiten Zonen eine zweite diffraktive Oberflächenstruktur abgeformt ist, die sich von der ersten diffraktiven Oberflächenstruktur unterscheidet.

9. Mehrschichtkörper (6, 9) nach einem der vorgehenden Ansprüche,
**dadurch gekennzeichnet,**
**dass** in die von der zweiten Schicht abgekehrte obere Grenzfläche der ersten Schicht oder eine Teilschicht der ersten Schicht in den ersten Zonen eine dritte diffraktive Oberflächenstruktur (134, 138) abgeformt ist und die dritte Oberflächenstruktur insbesondere von einer Oberflächenstruktur mit einem Tiefen-zu-Breiten-Verhältnis der Strukturelemente von mehr als 0,5 und einer Spatialfrequenz von mehr als 2.000 Linien/mm gebildet ist.

10. Mehrschichtkörper (2) nach einem der vorgehenden Ansprüche,
**dadurch gekennzeichnet,**
**dass** das Mikrobildraster und/oder das Mikrostrukturraster im ersten Bereich (32) ein eindimensionales Raster ist.

11. Mehrschichtkörper nach einem der vorgehenden Ansprüche,
**dadurch gekennzeichnet,**
**dass** der Rasterabstand des Mikrobildrasters und/oder des Mikrostrukturrasters sich in dem ersten Bereich in zumindest einer Raumrichtung stetig ändert oder die Rasterabstände der Mikrobilder und/oder Mikrostrukturen in dem ersten Bereich in Richtung der Koordinatenachse y1 bzw. y2 konstant sind und die Rasterabstände der Mikrobilder bzw. Mikrostrukturen in Richtung der Koordinatenachse x1 bzw. x2 in Abhängigkeit von der durch die Koordinatenachse y1 bzw. y2 bestimmten Koordinate y und/oder der durch die Koordinatenachse x1 bzw. x2 bestimmten Koordinate x gemäß einer Funktion F(x,y) variiert.

12. Mehrschichtkörper nach einem der vorgehenden Ansprüche,
**dadurch gekennzeichnet,**
**dass** die Längsachse der Mikrobilder gegenüber der Querachse der Mikrobilder durch eine Transformationsfunktion um mehr als das Zehnfache gestreckt ist und/oder dass die Mikrobilder des Mikrobildrasters in dem ersten Bereich von Mikrobildern gebildet sind, welche durch eine geometrische Transformation eines Grundbildes umfassend Drehung und/oder Vergrößerung oder Verkleinerung des Grundbildes und optionaler anschließender Verzerrung gemäß einer Transformationsfunktion gebildet sind .

13. Mehrschichtkörper nach einem der Ansprüche 1 bis 12,
**dadurch gekennzeichnet,**
**dass** sich zumindest zwei Mikrostrukturen des Mikrostrukturrasters im ersten Bereich voneinander unterscheiden, insbesondere dass sich die Bereiche der ersten Schicht, auf die das aus Richtung der ersten Schicht im Bereich der jeweiligen dritten Zone einfallende Licht rückreflektiert und/oder rückgebeugt wird, in ihrer Fläche, Breite und/oder Länge gemäß einer Transformationsfunktion in Abhängigkeit von der Koordinate auf der x2 und/oder y2 Koordinatenachse ändert, und/oder dass das erste und/oder zweite Koordinatensystem von einem Koordinatensystem mit kreis- oder schlangenlinienförmigen Koordinatenachsen gebildet ist.

14. Mehrschichtkörper nach einem der vorgehenden Ansprüche,
**dadurch gekennzeichnet,**
**dass** in einem neben dem ersten Bereich angeordneten zweiten Bereich des Mehrschichtkörpers die Mikrobilder des Mikrobildrasters und die Mikrostrukturen des Mikrostrukturrasters sich überlagernd in fester Lage zueinander angeordnet sind und der durch die Beabstandung der Flächenschwerpunkte benachbarter dritter Zonen bestimmte Mikrostrukturabstand und der durch die Beabstandung der Flächenschwerpunkte benachbarter erster Zonen bestimmte Mikrobildabstand sich voneinander in zumindest einer Raumrichtung im zweiten Bereich um nicht mehr als 10 % unterscheiden, und dass sich in dem zweiten Bereich das Mikrobildraster und/oder das Mikrostrukturraster in ein oder mehreren der Parameter, ausgewählt aus der Gruppe Mikrobildabstand, Mikrostrukturabstand, Ausrichtung der x1-, x2-, y1-, y2-Achse und Verzerrung der Mikrobilder gegenüber dem Mikrobildraster und/oder dem Mikrostrukturraster in dem ersten Bereich unterscheidet, wobei insbesondere in dem ersten Bereich die Differenz aus dem Mikrobildabstand und dem Mikrostrukturabstand positiv und in dem zweiten Bereich negativ ist, zwei oder mehr erste und zweite Bereiche abwechselnd nebeneinander angeordnet sind, sich die Mikrobilder des Mikrobildrasters in dem ersten Bereich und in dem zweiten Bereich voneinander unterscheiden oder in dem ersten Bereich und in dem zweiten Bereich das jeweilige Mikrobildraster und/oder das jeweilige Mikrostrukturraster in Bezug auf die Koordinatenachse y1 bzw. y2 zueinander einen Phasenversatz aufweisen oder sich die Mikrostrukturen des Mikrostrukturrasters im ersten Bereich von den Mikrostrukturen des Mikrostrukturrasters im zweiten Bereich unterscheiden, insbesondere sich die Bereiche der ersten Schicht, auf die das aus Richtung der ersten Schicht im Bereich der jeweiligen dritten Zonen einfallende Licht rückreflektiert und/oder rückgebeugt wird, in ihrer Fläche, Breite und/oder Länge unterscheiden.

15. Mehrschichtkörper (3, 4) nach einem der vorgehenden Ansprüche,
**dadurch gekennzeichnet,**
**dass** der Mehrschichtkörper ein Sicherheits- oder Wertdokument, insbesondere eine Banknote ist, dass der Mehrschichtkörper ein Trägersubstrat (41, 43) aufweist und dass die erste und die zweite Schicht auf gegenüberliegenden Seiten des Trägersubstrats angeordnet sind.

**Claims**

1. Multilayer body (1 to 9), in particular a multilayer security element for securing security documents, having a first layer (13) with a plurality of opaque and/or reflective first zones (21), which are each separated from one another by one or more transparent second zones (22), wherein the first zones (21) are formed as micro-images whose smallest dimension is less than 100μm and are arranged according to a micro-image grid having a spacing of adjacent micro-images in a first spatial direction of less than 300μm, wherein a first coordinate system having a coordinate axis x1 (53, 57) and a coordinate axis y1 (54, 58) at right angles thereto are spanned by the micro-image grid, having a second layer (14) formed from a transparent material arranged beneath the first layer (13), and having a reflective layer (15) arranged beneath the second layer (14), wherein the second layer (14) has a plurality of third zones (23), in which a respective microstructure (17, 18) is moulded into the boundary surface of the second layer (14) with respect to the reflective layer, said boundary surface facing away from the first layer and said microstructure being covered by the reflective layer (15), wherein the microstructures (17, 18) are arranged according to a microstructure grid having a spacing of adjacent microstructures in a second spatial direction of less than 300μm, by which a second coordinate system having a coordinate axis x2 (51, 55) and a coordinate axis y2 (52, 56) that is at right angles thereto is spanned, and wherein the micro-images of the micro-image grid and the microstructures of the microstructure grid are arranged with fixed superimposition in a first region (31, 32) of the multilayer body and the microstructure spacing (61, 62) determined by the spacing of the area centroids of adjacent third zones (23) and the micro-image spacing (63, 64, 67) determined by the spacing of the area centroids of adjacent first zones (21) do not differ from each other by more than 10% in at least one third spatial direction in the first region (31, 32), **characterised in that** each of the microstructures (17, 18) is configured in such a way that it reflects or diffracts incident light back onto a region of the first layer, the surface of which is smaller than the surface of the respective third zone (23) by at least a factor of 10, said incident light being perpendicular with respect to the plane spanned by the first layer from the direction of the first layer in the region of the respective third zone (23), and **in that**, in the first region (31, 32), the surface covered by the first zones (21) is smaller than the surface covered by the third zones (23) by at least a factor of 4, and in the first zones (21), a first diffractive surface structure (133) is moulded in the lower boundary surface of the first layer (13), oriented towards the second layer (14).

2. Multilayer body (70, 75), in particular a multilayer security element for securing security documents, having a first layer (13) with one or more transparent first zones (21), which are each separated from one another by one or more transparent second zones (22), wherein the first layer (13) is configured in such a way that the first and the second zones possess different transmission properties for the incident light, and are in particular differently coloured, possess a different level of transmissivity and/or deflect the incident light differently, having a second layer (14) formed from a transparent material arranged beneath the first layer (13), and having a reflective layer (15) arranged beneath the second layer (14), wherein the second layer (14) has a plurality of third zones (23) in which a respective microstructure is moulded into the boundary surface of the second layer with respect to the reflective layer, said boundary surface facing away from the first layer and said microstructure being covered by the reflective layer, wherein the microstructures (17, 18) are arranged according to a microstructure grid having a spacing of adjacent microstructures in a second spatial direction of less than 300μm, by which a second coordinate system having a coordinate axis x2 (51, 55) and a coordinate axis y2 (52, 56) that is at right angles thereto is spanned, **characterised in that** each of the microstructures (17, 18) is configured in such a way that it reflects or diffracts incident light back onto a region of the first layer, the surface of which is smaller than the surface of the respective third zone (23) by at least a factor of 10, said incident light being perpendicular with respect to the plane spanned by the first layer from the direction of the first layer in the region of the respective third zone, and **in that**, in the first region (31, 32), the surface covered by the first zones (21) is smaller than the surface covered by the third zones (23) by at least a factor of 4, and in the first zones (21), a first diffractive surface structure (133) is moulded in the lower boundary surface of the first layer (13), oriented towards the second layer (14).

3. Multilayer body according to claim 2, **characterised in that**, the first layer (13) has a respective first diffractive or refractive structure (71, 72) in the one or more first zones (21), for deflecting the incident light, said structure being moulded into a surface of the first layer (13) or a surface of a partial layer of the first layer, and **in that** the first layer (13) has no respective diffractive or refractive structure in the one or more second zones (22) for deflecting the incident light, or has a second diffractive or refractive structure for deflecting the incident light, said second structure differing from the first structure (71, 72) and being moulded into a surface of the first layer or a surface of a partial layer of the first layer.

4. Multilayer body (1 to 9) according to one of the preceding claims, **characterised in that**, in the first region (31, 32), the surface proportion of the first zones (21) on the total surface of the first and second zones (21, 22) is between 20% and 10%, and/or in the first region (31, 32), the surface covered by the first zones (21) is smaller than the surface covered by the third zones (23) by a factor of 10 to 20.

5. Multilayer body (1 to 9) according to one of the preceding claims, **characterised in that**, the microstructures (17, 18) are each formed in such a way that they reflect and/or refract incident light back onto a region of the first layer, the surface of which is between 10 and 10,000 times smaller, in particular between 15 and 2,500 times smaller than the surface of the respective third zone (23), said incident light being perpendicular with respect to the plane spanned by the first layer from the direction of the first layer in the region of the respective third zone (23).

6. Multilayer body (1) according to one of the preceding claims, **characterised in that**, the microstructures (17) are diffractive structures having a spatial frequency of greater than 300 lines/mm or are each kinoforms, and/or the spatial frequency of the microstructures (17) in the region of the area centroid of the respective third zones (23) has a minimum value and the spatial frequency of the microstructure is increased based on the area centroid in at least one spatial direction, or the edge tapering of the edge of the structural elements of the microstructure (17), positioned with respect to the area centroid of the respective third zone, is increased in at least one spatial direction based on the area centroid, or the local structural depth with which the microstructure is moulded into the second layer (14) is reduced in at least one spatial direction based on the area centroid of the respective third zones.

7. Multilayer body (4) according to one of the preceding claims, **characterised in that**, each of the third zones (23) is surrounded by one or more fourth zones (24), in which the reflective layer (15) is not provided, and in particular the multilayer body (4) in the fourth zones (24) is formed to be transparent.

8. Multilayer body (5, 7, 8) according to one of the preceding claims, **characterised in that**, a second diffractive surface structure is moulded in the second zones, said surface structure differing from the first diffractive surface structure.

9. Multilayer body (6, 9) according to one of the preceding claims, **characterised in that**, in the first zones, a third diffractive structure (134, 138) is moulded into the upper boundary surface of the first layer, which is turned away from the second layer, or into a partial layer of the first layer, and the third surface structure is in particular formed from a surface structure having a depth-to-width ratio of structural elements of greater than 0.5 and a spatial frequency of greater than 2,000 lines/mm.

10. Multilayer body (2) according to one of the preceding claims, **characterised in that**, the micro-image grid and/or the microstructure grid is a one-dimensional grid in the first region (32).

11. Multilayer body according to one of the preceding claims, **characterised in that**, the grid spacing of the micro-image grid and/or the microstructure grid in the first region constantly changes in at least one spatial direction or the grid spacing of the micro-images and/or microstructures in the first region is constant in the direction of the coordinate axis y1 or y2, and the grid spacing of the micro-images or microstructures varies according to a function F(x, y) in the direction of the coordinate axis x1 or x2 depending on the y coordinate defined by the coordinate axis y1 or y2 and/or the x coordinate determined by the coordinate axis x1 or x2.

12. Multilayer body according to one of the preceding claims, **characterised in that**,

the longitudinal axis of the micro-images is extended by a transformation function by more than a factor of ten compared to the transverse axis of the micro-images, and/or the micro-images of the micro-image grid is formed by micro-images in the first region, which are formed by a geometric transformation of a basic image, comprising rotation and/or enlargement or reduction of the basic image and optional subsequent distortion according to a transformation function.

13. Multilayer body according to one of claims 1 to 9, **characterised in that**, at least two microstructures of the microstructure grid differ from one another in the first region, in particular **in that** the regions of the first layer, onto which the incident light is reflected or diffracted back from the direction of the first layer in the region of the respective third zone, change their surface, width and/or length according to a transformation function depending on the coordinates on the x2 and/or y2 coordinate axis, and/or **in that** the first and/or second coordinate system is formed from a coordinate system having orbital or sinuous line coordinate axis.

14. Multilayer body according to one of the preceding claims, **characterised in that**, in a second region of the multilayer body arranged alongside the first region, the micro-images of the micro-image grid and the microstructures of the microstructure grid are arranged with fixed superimposition with respect to one another, and the microstructure spacing determined by the spacing of the area centroids of adjacent third zones and the micro-image spacing determined by the spacing of the area centroids of adjacent first zones do not differ from each other by more than 10% in at least one spatial direction in the second region, and **in that**, in the second region, the micro-image grid and/or the microstructure grid differs from the micro-image grid and/or the microstructure grid in the first region in terms of one or more of the parameters, selected from the group of micro-image spacing, microstructure spacing, orientation of the x1, x2, y1, y2 axis and distortion of the micro-images, wherein, in particular in the first region, the differential from the micro-image spacing and the microstructure spacing is positive and is negative in the second region, two or more first and second regions are arranged alternatingly alongside each other, the micro-images of the micro-image grid differ from one another in the first region and in the second region or, in the first region and in the second region, the respective micro-image grid and/or the respective microstructure grid have a phase shift relative to each other with respect to the coordinate axis y1 or y2, or the microstructures of the microstructure grid in the first region differ from the microstructures of the microstructure grid in the second region, and in particular the regions of the first layer, onto which the incident light is reflected or diffracted back from the direction of the first layer in the region of the respective third zones, differ in terms of their surface, width and/or length.

15. Multilayer body (3, 4) according to one of the preceding claims, **characterised in that**, the multilayer body is a security document or document of value, in particular a bank note, **in that** the multilayer body has a carrier substrate (41, 43) and **in that** the first and the second layer are arranged on opposite sides of the carrier substrate.

**Revendications**

1. Corps multicouche (1 à 9), en particulier élément de sécurité multicouche pour la sécurisation de documents de sécurité, comportant une première couche (13) présentant une multiplicité de premières zones (21) opaques et/ou réflectives qui sont séparées les unes des autres respectivement par une ou plusieurs deuxièmes zones (22) transparentes, dans lequel les premières zones (21) sont formées comme des micro-images dont la dimension la plus faible est inférieure à 100 μm et sont disposées selon une trame de micro-image présentant un espacement de micro-images voisines dans une première direction spatiale inférieur à 300 μm, dans lequel un premier système de coordonnées présentant un axe de coordonnées x1 (53, 57) et un axe de coordonnées perpendiculaire à celui-ci y1 (54, 58) s'étend dans la trame de micro-image, comportant une deuxième couche (14) disposée sous la première couche (13) en un matériau transparent et une couche réfléchissante (15) disposée sous la deuxième couche (14), dans lequel la deuxième couche (14) présente une multiplicité de troisièmes zones (23) dans lesquelles respectivement une microstructure (17, 18) est façonnée dans la face de la deuxième couche (14) détournée de la première couche, en direction de la couche réfléchissante, qui est dotée de la couche réfléchissante (15), dans lequel les microstructures (17, 18) sont disposées selon une trame de microstructure présentant un espacement de microstructures voisines dans une deuxième direction spatiale inférieur à 300 μm, dans lequel s'étend un deuxième système de coordonnées présentant un axe de coordonnées x2 (51, 55) et un axe de coordonnées perpendiculaire à celui-ci y2 (52, 56), et dans lequel, dans une première région (31, 32) du corps multicouche, les micro-images de la trame de micro-image et les microstructures de la trame de microstructure sont disposées de façon superposée dans une position fixe les unes par rapport aux autres, et la distance de microstructure (61, 62) déterminée par l'espacement des barycentres des troisièmes zones voisines (23) et la distance de micro-image (63, 64, 67) déterminée par l'espacement des barycentres des premières zones voisines (21) ne se distingue pas de l'autre de plus de 10 % dans au moins une troisième direction spatiale dans la première région (31, 32),
**caractérisé en ce que**
chacune des microstructures (17, 18) est conçue de telle sorte qu'elle réfléchisse et/ou diffracte perpendiculairement par rapport au plan s'étendant de la première couche une lumière incidente provenant de la première couche dans la région de la troisième zone respective (23) sur une région de la première couche dont la surface est plus petite d'au moins facteur 10 par rapport à la surface de la troisième zone respective (23), et **en ce que**, dans la première région (31, 32), la surface dotée de la première zone (21) est plus petite d'au moins facteur 4 que la surface dotée de la troisième zone (23), et **en ce que** dans la face limite inférieure orientée vers la seconde couche (14) de la première couche (13) dans les premières zones (21) une première structure superficielle diffractive (133) est façonnée.

2. Corps multicouche (70, 75), en particulier élément de sécurité multicouche pour la sécurisation de documents de sécurité, comportant une première couche (13) présentant une ou plusieurs premières zones transparentes (21) qui sont séparées les unes des autres respectivement par une ou plusieurs deuxièmes zones (22) transparentes, dans lequel la première couche (13) est conçue de telle sorte que les premières et deuxièmes zones ont un comportement de transmission différent de la lumière incidente, en particulier, se colorent différemment, possèdent une transmissivité différente et/ou renvoient de façon différente la lumière incidente, comportant une deuxième couche (14), disposée sous la première couche (13), d'un matériau transparent et une couche réfléchissante (15) disposée sous la deuxième couche (14), dans lequel la deuxième couche (14) présente une multiplicité de troisièmes zones (23) dans lesquelles respectivement une microstructure est façonnée dans la face de la deuxième couche détournée de la première couche, en direction de la couche réfléchissante, qui est dotée de la couche réfléchissante, dans lequel les microstructures (17, 18) sont disposées selon une trame de microstructure présentant un espacement de microstructures voisines dans une deuxième direction spatiale inférieur à 300 µm, dans lequel s'étend un deuxième système de coordonnées présentant un axe de coordonnées x2 (51, 55) et un axe de coordonnées perpendiculaire à celui-ci y2 (52, 56),

**caractérisé en ce que**
chacune des microstructures (17, 18) est conçue de telle sorte qu'elle réfléchisse et/ou diffracte perpendiculairement par rapport au plan s'étendant depuis la première couche, une lumière incidente provenant de la première couche dans la région de la troisième zone respective sur une région de la première couche dont la surface est plus petite d'au moins facteur 10 par rapport à la surface de la troisième zone respective (23), et **en ce que**, dans la première région (31, 32), la surface dotée de la première zone (21) est plus petite d'au moins facteur 4 que la surface dotée de la troisième zone (23), et **en ce que** dans la face limite inférieure orientée vers la seconde couche (14) de la première couche (13) dans les premières zones (21) une première structure superficielle diffractive (133) est façonnée.

3. Corps multicouche selon la revendication 2,
**caractérisé en ce que**
la première couche (13) présente, dans l'une ou plusieurs premières zones (21) respectivement, une première structure diffractive ou réfractive (71, 72) pour renvoyer la lumière incidente, laquelle est façonnée dans une surface de la première couche (13) ou une surface d'une couche partielle de la première couche, et **en ce que** la première couche (13) ne présente pas, dans l'une ou plusieurs deuxièmes zones (22) respectivement, de structure diffractive ou réfractive pour renvoyer la lumière incidente ou présente une deuxième structure diffractive ou réfractive pour renvoyer la lumière incidente, laquelle se distingue de la première structure (71, 72) et est façonnée dans une surface de la première couche ou une surface d'une couche partielle de la première couche.

4. Corps multicouche (1 à 9) selon l'une des revendications précédentes,
**caractérisé en ce que**
dans la première région (31, 32), le pourcentage de surface des premières zones (21) par rapport à la surface totale des premières et deuxièmes zones (21, 22) se situe entre 20 % et 10 % et/ou **en ce que** dans la première région (31, 32), la surface couverte par les premières zones (21) est inférieure de facteur 10 à 20 à la surface couverte par les troisièmes zones (23).

5. Corps multicouche (1 à 9) selon l'une des revendications précédentes,
**caractérisé en ce que**
les microstructures (17, 18) sont conçues de telle sorte qu'elles réfléchissent et/ou diffractent perpendiculairement par rapport au plan s'étendant de la première couche, une lumière incidente provenant de la première couche dans la région des troisièmes zones respectives (23) sur une région de la première couche dont la surface est entre 10 et 10 000 fois plus petite, en particulier, entre 15 et 2 500 fois plus petite que la surface de la troisième zone respective (23).

**6.** Corps multicouche (1) selon l'une des revendications précédentes,
**caractérisé en ce que**
les microstructures (17) sont des structures diffractives présentant une fréquence spatiale de plus de 300 lignes/mm et sont respectivement des kinoformes, et/ou **en ce que** la fréquence spatiale des microstructures (17) possède dans la région du barycentre des troisièmes zones respectives (23) un minimum et la fréquence spatiale de la microstructure augmente à partir du barycentre dans au moins une direction spatiale ou **en ce que** l'inclinaison des flancs du flanc orienté vers le barycentre de la troisième zone respective de l'élément de structure de la microstructure (17) augmente à partir du barycentre dans au moins une direction spatiale ou **en ce que** la profondeur de structure locale avec laquelle la microstructure est façonnée dans la deuxième couche (14) diminue à partir du barycentre des troisièmes zones respectives dans au moins une direction spatiale.

**7.** Corps multicouche (4) selon l'une des revendications précédentes,
**caractérisé en ce que**
chacune des troisièmes zones (23) est entourée d'une ou plusieurs quatrièmes zones (24) dans lesquelles la couche réfléchissante (15) n'est pas prévue et en particulier le corps multicouche (4) est transparent dans les quatrièmes zones (24).

**8.** Corps multicouche (5, 7, 8) selon l'une des revendications précédentes,
**caractérisé en ce que**
dans les deuxièmes zones, une deuxième structure superficielle diffractive est façonnée, qui se distingue de la première structure superficielle diffractive.

**9.** Corps multicouche (6, 9) selon l'une des revendications précédentes,
**caractérisé en ce que**
dans la face supérieure détournée de la deuxième couche de la première couche ou une couche partielle de la première couche dans les premières zones, une troisième structure superficielle diffractive (134, 138) est façonnée et la troisième structure superficielle est constituée en particulier d'une structure superficielle ayant un rapport profondeur à largeur des éléments structuraux de plus de 0,5 et une fréquence spatiale de plus de 2 000 lignes/mm.

**10.** Corps multicouche (2) selon l'une des revendications précédentes,

**caractérisé en ce que**
la trame de micro-image et/ou la trame de microstructure est une trame unidimensionnelle dans la première région (32).

**11.** Corps multicouche selon l'une des revendications précédentes,
**caractérisé en ce que**
la distance de trame de la trame de micro-image et/ou de la trame de microstructure se modifie constamment dans la première région dans au moins une direction spatiale ou les distances de trame des micro-images et/ou des microstructures sont constantes dans la première région en direction de l'axe de coordonnées y1 ou y2 et les distances de trame des micro-images ou microstructures dans la direction de l'axe de coordonnées x1 ou x2 varient en fonction des coordonnées déterminées par l'axe de coordonnées y1 ou y2 et/ou des coordonnées x déterminées par l'axe de coordonnées x1 ou x2 selon une fonction F(x,y).

**12.** Corps multicouche selon l'une des revendications précédentes,
**caractérisé en ce que**
l'axe longitudinal des micro-images par rapport à l'axe vertical des micro-images est plus de 10 fois plus long, par une fonction de transformation et/ou **en ce que** les micro-images de la trame de micro-image sont formées dans la première région des micro-images, lesquelles sont formées par une transformation géométrique d'une image de base comprenant une rotation et/ou un agrandissement ou une réduction de l'image de base et éventuellement ensuite une déformation selon une fonction de transformation.

**13.** Corps multicouche selon l'une des revendications 1 à 12,
**caractérisé en ce que**
au moins deux microstructures de la trame de microstructure se distinguent l'une de l'autre dans la première région, en particulier **en ce que** les régions de la première couche sur laquelle la lumière incidente provenant de la première couche est réfléchie et/ou diffractée de la troisième zone respective, sur leur surface, leur largeur et/ou leur longueur sont modifiées selon une fonction de transformation en fonction des coordonnées sur l'axe des coordonnées x2 et/ou y2 et/ou **en ce que** le premier et/ou le deuxième système de coordonnées est formé d'un système de coordonnées présentant des axes de coordonnées ayant des lignes de forme circulaire ou ondulée.

**14.** Corps multicouche selon l'une des revendications précédentes,
**caractérisé en ce que,**

dans une deuxième région du corps multicouche, disposée à côté de la première région, les micro-images de la trame de micro-images et les microstructures de la trame de microstructure sont disposées de façon superposée dans une position fixe les unes par rapport aux autres, et la distance de microstructure déterminée par l'espacement des barycentres des troisièmes zones voisines et la distance de micro-image déterminée par l'espacement des barycentres des premières zones voisines ne se distinguent pas l'une de l'autre de plus de 10 % dans au moins une direction spatiale dans la deuxième région et **en ce que**, dans la deuxième région, la trame de micro-image et/ou la trame de microstructure se distingue dans un ou plusieurs des paramètres, choisis dans le groupe comprenant une distance de micro-image, une distance de microstructure, une étendue des axes x1, x2, y1, y2 et une déformation des micro-images par rapport à la trame de micro-image et/ou à la trame de microstructure dans la première région, dans lequel en particulier dans la première région, la différence de la distance de micro-image et la distance de la microstructure est positive et dans la deuxième région, est négative, deux ou plus premières et deuxièmes zones sont disposées alternativement côte à côte, les micro-images de la trame de micro-image dans la première région et dans la deuxième région se distinguent les unes des autres ou dans la première région et dans la deuxième région, la trame de micro-image respective et/ou la trame de microstructure respective par rapport à l'axe de coordonnées y1 ou y2 présentent l'une par rapport à l'autre, un déphasage ou les microstructures de la trame de microstructure dans la première région se distinguent des microstructures de la trame de microstructure dans la deuxième région, en particulier les régions de la première couche sur laquelle la lumière incidente provenant de la première couche dans la région des troisièmes zones respectives est réfléchie et/ou diffractée, se distinguent dans leur surface, leur largeur et/ou leur longueur.

15. Corps multicouche (3, 4) selon l'une des revendications précédentes,
**caractérisé en ce que**
le corps multicouche est un document de sécurité ou de valeur, en particulier, un billet de banque, **en ce que** le corps multicouche présente un substrat porteur (41, 43) et **en ce que** la première et la deuxième couche sont disposées sur des côtés opposés du substrat porteur.

**Fig. 1**

**Fig. 2a**

**Fig. 2b**

**Fig. 3a**

**Fig. 3b**

*Fig. 4*

**Fig. 5**

**Fig. 6**

**Fig. 7**

**Fig. 8**

**Fig. 9**

**Fig. 10**

*Fig. 11*

**Fig. 12a**

**Fig. 12b**

*Fig. 13*

*Fig. 14*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0330733 A1
- EP 0064067 A1

- US 20090122412 A1